# EUROPEAN PATENT APPLICATION

(11) **EP 2 774 942 A1**
(43) Date of publication of application: **10.09.2014**
(21) Application number: 12846468.2
(22) Date of filing: 29.10.2012
(51) Int. Cl.: C08G 77/58, C08G 79/00, C09D 183/14, C09D 185/00

(54) **BIVALENT-TRIVALENT METAL ORGANIC-INORGANIC LAYERED COMPOSITE, AND MANUFACTURING METHOD FOR SAME**

(30) Priority: 31.10.2011 JP 2011238899; 19.01.2012 JP 2012008999
(71) Applicant: Kabushiki Kaisha Toyota Chuo Kenkyusho, Nagakute-shi, Aichi 480-1192 (JP)
(72) Inventor: TANI, Masaaki, Aichi 480-1192 (JP); KUMANO, Naomi, Aichi 480-1192 (JP)
(74) Representative: Kramer - Barske - Schmidtchen
(86) International application number: PCT/JP2012/077887
(87) International publication number: WO 2013/065638

(57) **Abstract**

A divalent-trivalent metal-based organic-inorganic layered composite is represented by the following formula (1) :

[R¹ₙSiO_{(4-n)/2}]ₓ[(M¹_{2/2}O)_{y}(M²_{2/3}O)_{z}] [H₂O]_{w} (1)

(in the formula (1), R¹ represents an organic group, M¹ represents a divalent metal atom, M² represents a trivalent metal atom, n is an integer of 1 to 3, x, y, and z are arbitrary numbers that satisfy a condition represented by 0.5 ≤ x/(y+2z/3) ≤ 3, and w represents the number of a structural water molecule), wherein the number of the trivalent metal atom is 1 to 67% of a total of 100 atoms of the divalent metal atom and the trivalent metal atom.

## Description

### [Technical Field]

The present invention relates to an organic-inorganic layered composite and a method for producing the composite, and more specifically to an organic-inorganic layered composite comprising an inorganic layer constituted of metal oxides and an organic layer constituted of an organic group bonded to the metal oxides via a silicon atom, and a method for producing the composite. Moreover, the present invention relates to a cationic UV curable coating composition comprising such an organic-inorganic layered composite, a cured coating film using the composition, and a method for producing the cured coating film.

### [Background Art]

An organic-inorganic composite material has a portion made of an inorganic material such as a metal or a compound thereof and a portion made of an organic material such as a hydrocarbon chain, and possesses both properties attributed to the inorganic material and properties attributed to the organic material. Such materials are used in various fields.

As an example of such an organic-inorganic material, Japanese Unexamined Patent Application Publication No. 2009-185148 (PTL 1) discloses an organic-inorganic layered composite including an inorganic layer, in which a layer formed of a tetrahedral structure containing a Si atom as a central atom and a layer formed of an octahedral structure containing a metal atom such as a Mg atom or an Al atom as a central atom form a 2:1-type or 1:1-type layered silicate structure, and an organic layer formed of an organic group bonded to the Si atom by a covalent bond.

Moreover, J. Phys. Chem. B, 1997, vol. 101, No. 4, pp. 531 to 539 (NPL 1) discloses such an organic-inorganic layered composite, that is, a layered inorganic-organic nanocomposite containing a Mg atom or an Al atom as a central atom of an octahedral structure, and also discloses that the degree of silane condensation is higher in a layered inorganic-organic nanocomposite containing only a Mg atom as a central atom of an octahedral structure than one containing only an Al atom.

On the other hand, cationic UV curable coating compositions have the following advantages over radical UV curable coating compositions: (i) the curing is less likely to be inhibited by oxygen, (ii) the curing reaction progresses even after light irradiation, and (iii) when a monomer used is a ring-opening polymerization type monomer, it can reduce the volume shrinkage at the time of curing, making the residual stress of the cured coating film small, and thereby a cured coating film having an excellent adhesion is obtained. Nevertheless, the polymerization rate of cationic UV curable monomers is slow in comparison with radical UV curable monomers. This makes it difficult to form a cured coating film having a sufficiently high surface hardness.

Accordingly, as a cationic UV curable resin composition having enhanced photocurability, resin compositions blended with metal oxide particles are proposed (for example, Japanese Unexamined Patent Application Publication No. 2000-26730 (PTL 2), International Publication No. WO2004/033532 (PTL 3), and Japanese Unexamined Patent Application Publication No. 2005-89697 (PTL 4)). In such a resin composition, in order to increase the dispersibility of the metal oxide particles, a dispersant such as an organic silane compound, or the like, is used to uniformly disperse the metal oxide particles. Nevertheless, it cannot always be said that the method for dispersing metal oxide particles using a dispersant is a sufficient method to obtain a cured coating film having a high hardness. It is required that inorganic particles such as metal oxide particles should be dispersed in a resin to a higher degree.

Moreover, as a resin composition in which an organic-inorganic composite obtained by treating the surface of inorganic particles with an organic compound is dispersed in a resin, an adhesive containing a magnesium silicon-based layered polymer having an epoxy group and mercaptan or an epoxy compound is proposed (Japanese Unexamined Patent Application Publication No. Hei 9-71763 (PTL 5), and Japanese Unexamined Patent Application Publication No. 2008-115299 (PTL 6)). By thermally curing such an adhesive, a strong adhesive force is achieved.

### [Citation List]

### [Patent Literature]

[PTL 1] Japanese Unexamined Patent Application Publication No. 2009-185148
[PTL 2] Japanese Unexamined Patent Application Publication No. 2000-26730
[PTL 3] International Publication No. WO2004/033532
[PTL 4] Japanese Unexamined Patent Application Publication No. 2005-89697
[PTL 5] Japanese Unexamined Patent Application Publication No. Hei 9-71763
[PTL 6] Japanese Unexamined Patent Application Publication No. 2008-115299

### [Non Patent Literature]

[NPL 1] L. Ukrainczyk et al., J. Phys. Chem. B, 1997, vol. 101, No. 4, pp. 531 to 539

### [Summary of Invention]

### [Technical Problem]

However, an organic-inorganic layered composite containing only a Mg atom has a low dispersibility in an organic material such as an organic solvent. If such an organic-inorganic layered composite recovered as a powder is used, it is difficult to uniformly disperse the composite in an organic material again. Further, if the organic-inorganic composites described in PTLs 5 and 6 are blended with a cationic UV curable coating composition, a cured coating film having a sufficient hardness can be obtained, but it is difficult to obtain a transparent cured coating film excellent in water resistance.

The present invention has been made in consideration of the above-described problems of the conventional techniques. A first object thereof is to provide: an organic-inorganic layered composite comprising a divalent metal atom such as a Mg atom, and being excellent in dispersibility in an organic material such as an organic solvent, particularly dispersibility when dispersed in an organic material such as an organic solvent again after recovered in the form of fine particles (hereinafter referred to as "re-dispersibility"); and a method for producing the composite. Moreover, a second object of the present invention is to provide a cationic UV curable coating composition capable of forming a transparent cured coating film, which has a sufficient hardness and an excellent water resistance without impairing the adhesion to a base material.

### [Solution to Problem]

The present inventors have earnestly studied in order to achieve the first object. As a result, the inventors have found out that a divalent metal atom such as a Mg atom and a trivalent metal atom such as an Al atom used in combination as metal atoms in an organic-inorganic layered composite improve the dispersibility (particularly, re-dispersibility) of the organic-inorganic layered composite in an organic material in comparison with one containing only a divalent metal atom. Meanwhile, the inventors have revealed that both an organic-inorganic layered composite containing only a divalent metal atom and an organic-inorganic layered composite containing only a trivalent metal atom contain a lot of siloxane bonds in comparison with silanol groups; nevertheless, in a case where a divalent metal atom and a trivalent metal atom are used in combination, if the content of the trivalent metal atom is too high, the content of siloxane bonds is lowered in comparison with silanol groups. Hence, the present inventors have earnestly further studied, and as a result found out that it is necessary to use a divalent metal atom and a trivalent metal atom in combination and also to suppress the content of the trivalent metal atom in order to obtain an organic-inorganic layered composite excellent in dispersibility (particularly, re-dispersibility) in an organic material and containing a lot of siloxane bonds in comparison with silanol groups. These discoveries have led to the completion of the present invention.

Specifically, a divalent-trivalent metal-based organic-inorganic layered composite of the present invention is represented by the following formula (1):

[R¹ₙSiO_{(4-n)/2}]ₓ[ (M¹_{2/2}O)_{y}(M²_{2/3}O)_{z}] [H₂O]_{w} (1)

(in the formula (1), R¹ represents an organic group, M¹ represents a divalent metal atom, M² represents a trivalent metal atom, n is an integer of 1 to 3, x, y, and z are arbitrary numbers that satisfy a condition represented by 0.5 ≤ x/(y+2z/3) ≤ 3, and w represents the number of a structural water molecule),
wherein the number of the trivalent metal atom is 1 to 67% of a total of 100 atoms of the divalent metal atom and the trivalent metal atom.

In such a divalent-trivalent metal-based organic-inorganic layered composite of the present invention, the number of the trivalent metal atom is preferably 1 to 45%, particularly preferably 1 to 10%, of a total of 100 atoms of the divalent metal atom and the trivalent metal atom.

Moreover, a method for producing a divalent-trivalent metal-based organic-inorganic layered composite of the present invention comprises:
a preparation step of dissolving an organoalkoxysilane represented by the following formula (2) :

   R¹ₙSi (OR²) ₍₄₋ₙ₎ (2)
(in the formula (2), R¹ represents an organic group, OR² represents an alkoxy group, and n is an integer of 1 to 3), a divalent metal compound containing a divalent metal atom, and a trivalent metal compound containing a trivalent metal atom in a first solvent, which is a polar solvent, to thereby prepare a raw-material solution containing a silicon atom, the divalent metal atom, and the trivalent metal atom under such conditions that an atomic ratio of the silicon atom to the metal atoms (the number of the silicon atom/a total number of the divalent metal atom and the trivalent metal atom) is from 0.5 to 3 both inclusive, and the number of the trivalent metal atom is 1 to 67% of a total of 100 atoms of the divalent metal atom and the trivalent metal atom;
a reaction step of subjecting the organoalkoxysilane, the divalent metal compound, and the trivalent metal compound to hydrolysis and dehydration condensation, to thereby synthesize a divalent-trivalent metal-based organic-inorganic layered composite containing the silicon atom, the divalent metal atom, and the trivalent metal atom; and
a removal step of adding to a solution resulting from the reaction step a second solvent, which does not dissolve compatibly with the solution, to thereby dissolve the divalent-trivalent metal-based organic-inorganic layered composite in the second solvent, and then removing a solution, which does not dissolve compatibly with the second solvent.

In such a method for producing a divalent-trivalent metal-based organic-inorganic layered composite of the present invention, it is preferable that, in the reaction step, water be added to the raw-material solution to synthesize the divalent-trivalent metal-based organic-inorganic layered composite, and it is preferable that, in the removal step, the second solvent, which does not dissolve compatibly with water at least, be added to an aqueous solution after the reaction step, and thereafter the aqueous solution be removed. Moreover, it is preferable that, in the reaction step, a pH of the raw-material solution be adjusted to an alkaline level to promote the reactions of the organoalkoxysilane, the divalent metal compound, and the trivalent metal compound.

Moreover, in the method for producing a divalent-trivalent metal-based organic-inorganic layered composite of the present invention, the first solvent is preferably at least one polar solvent selected from the group consisting of inorganic polar solvents and organic polar solvents, and more preferably at least one polar solvent selected from the group consisting of water and water-soluble organic solvents. The second solvent is preferably at least one organic solvent selected from the group consisting of ethyl acetate, toluene, and chloroform. Furthermore, the method for producing a divalent-trivalent metal-based organic-inorganic layered composite of the present invention preferably further comprises, after the removal step, a recovery step of removing the second solvent to thereby recover the divalent-trivalent metal-based organic-inorganic layered composite.

In addition, the present inventors have earnestly studied in order to achieve the second object. As a result, the inventors have found out that a divalent-trivalent metal-based organic-inorganic layered composite having at least one functional group of an epoxy group, an oxetanyl group, and a vinyl ether group, and comprising a divalent metal atom such as a Mg atom and a trivalent metal atom such as an Al atom shows an excellent dispersibility in a cationic UV curable coating composition, and consequently a transparent cured coating film having a sufficient hardness and an excellent water resistance is obtained. Further, the inventors have found out that, even though the divalent-trivalent metal-based organic-inorganic layered composite as described above is used, if the content of an Al atom that is a trivalent metal atom is too high, the water resistance of the cured coating film is reduced. These discoveries have led to the completion of the present invention.

Specifically, a cationic UV curable coating composition of the present invention comprises:
the divalent-trivalent metal-based organic-inorganic layered composite of the present invention, wherein R¹ in the formula (1) is an organic group having at least one functional group of an epoxy group, an oxetanyl group, and a vinyl ether group;
a cationic UV curable monomer; and
a cationic photopolymerization initiator. Moreover, a cured coating film of the present invention is obtained by irradiating a coating film comprising such a cationic UV curable coating composition of the present invention with ultraviolet light to photo-cure the coating film.
In the cationic UV curable coating composition of the present invention, the cationic UV curable monomer is preferably at least one compound selected from the group consisting of epoxy compounds, oxetane compounds, vinyl ether compounds, and styrene-based compounds.

In the divalent-trivalent metal-based organic-inorganic layered composite of the present invention, in the method for producing the composite, and in the cationic UV curable coating composition of the present invention, the trivalent metal atom is preferably at least one metal atom of aluminium (Al) and iron(III) (Fe(III)), and the divalent metal atom is preferably at least one metal atom selected from the group consisting of magnesium (Mg), nickel(II) (Ni(II)), cobalt(II) (Co(II)), copper(II) (Cu(II)), manganese (Mn), iron(II) (Fe(II)), lithium (Li), vanadium(II) (V(II)), zirconium (Zr), and zinc (Zn).

Note that, in the present description, "dissolving" is a phenomenon in which a substance (solute) dissolves in a solvent and turns into a uniform mixture (solution), and such a phenomenon includes a case where at least a part of a solute turns into ions after dissolving, a case where a solute does not dissociate into ions but exists in a molecular state, a case where molecules and ions exist in an associated state, and the like.

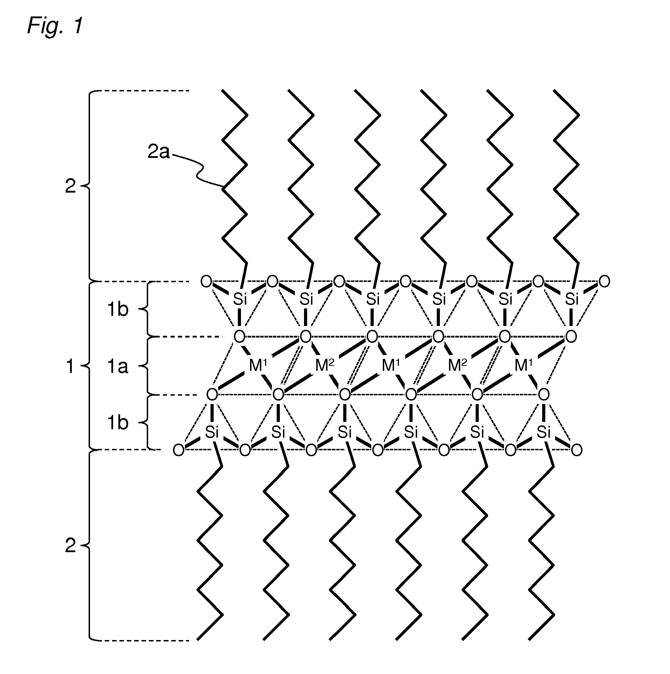

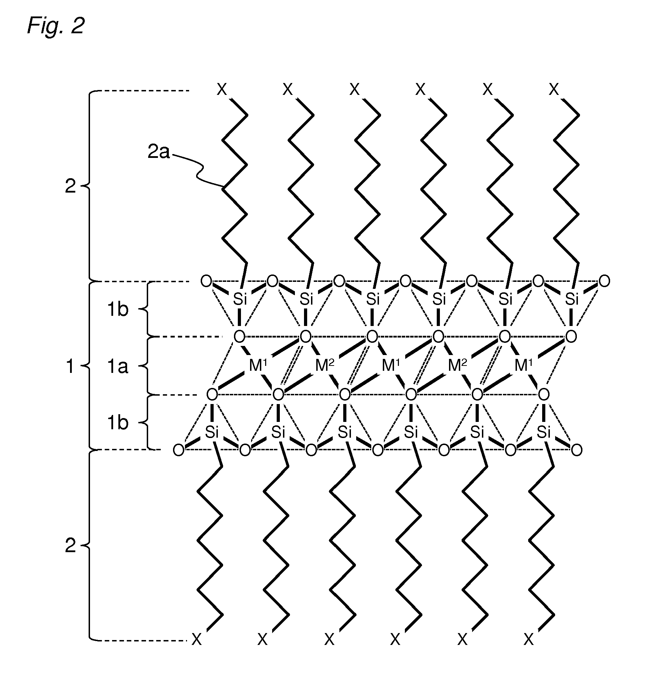

Meanwhile, it is not known exactly why the divalent-trivalent metal-based organic-inorganic layered composite of the present invention is excellent in dispersibility (particularly, re-dispersibility) in an organic material in comparison with a divalent metal-based organic-inorganic layered composite containing only a divalent metal atom. However, the present inventors speculate as follows. Specifically, as shown in Figs. 1 and 2, the divalent-trivalent metal-based organic-inorganic layered composite of the present invention presumably has a layer structure formed from: an inorganic layer 1 constituted of a layer 1a formed of an octahedral structure containing a divalent metal atom M¹ and a trivalent metal atom M² as a central atom (hereinafter referred to as "octahedral sheet") and a layer 1b formed of a tetrahedral structure containing a Si atom as a central atom (hereinafter referred to as "tetrahedral sheet"); and an organic layer 2 constituted of an organic group 2a bonded to the Si atom by a covalent bond (including an organic group having a functional group X) (Figs. 1 and 2 show a 2:1-type layered silicate structure).

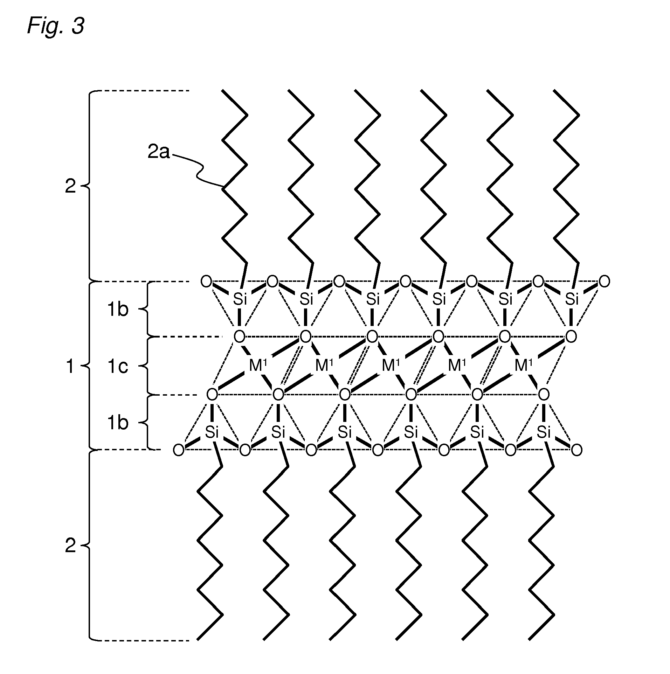

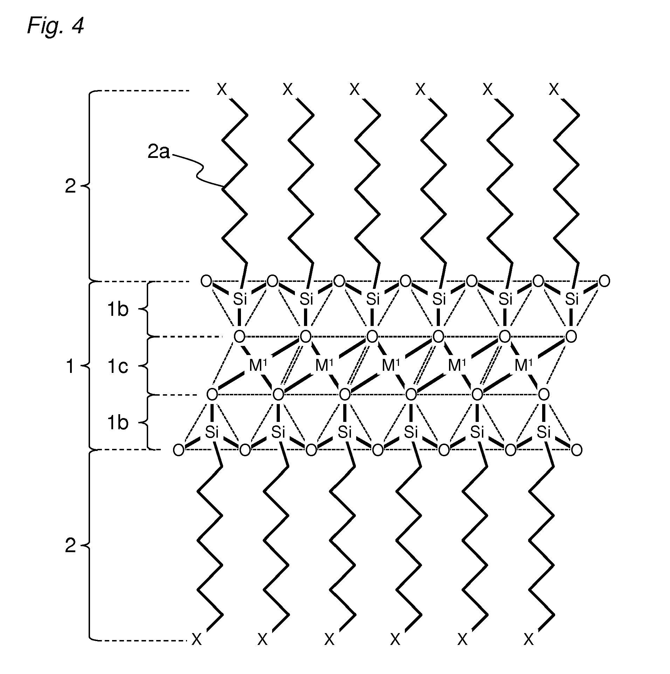

On the other hand, as shown in Figs. 3 and 4,a conventional divalent metal-based organic-inorganic layered composite presumably has a layer structure formed from: an inorganic layer 1 constituted of an octahedral sheet 1c containing only the divalent metal atom M¹ as a central atom and the tetrahedral sheet 1b containing a Si atom as a central atom; and an organic layer 2 constituted of the organic group 2a bonded to the Si atom by a covalent bond (including the organic group having the functional group X). In the octahedral sheet 1c constituting such a divalent metal-based organic-inorganic layered composite, the central atom is only the divalent metal atom M¹. Accordingly, the octahedral sheet 1c is likely to grow in a layer direction; as a result, the resulting organic-inorganic layered composite has a large particle diameter, and is less likely to be dispersed in an organic material, presumably.

In contrast, in the octahedral sheet 1a constituting the divalent-trivalent metal-based organic-inorganic layered composite of the present invention, both the divalent metal atom M¹ such as a Mg atom and the trivalent metal atom M² such as an Al atom coexist as a central atom. This suppresses the growth of the octahedral sheet 1a in a layer direction, and the resulting organic-inorganic layered composite has a small particle diameter; in addition, the particles have a high surface potential in comparison with the divalent metal-based organic-inorganic layered composite, and are likely to be dispersed in an organic material such as an organic solvent, presumably.

Particularly, the divalent-trivalent metal-based organic-inorganic layered composite having at least one functional group of an epoxy group, an oxetanyl group, and a vinyl ether group as the functional group X and comprising both the divalent metal atom M¹ and the trivalent metal atom M² as the central atom of the octahedral sheet (Fig. 2) tends to be excellent in dispersibility in a cationic UV curable coating composition, in comparison with the divalent metal-based organic-inorganic layered composite having a predetermined functional group such as an epoxy group as the functional group X and containing only the divalent metal atom M¹ as the central atom of the octahedral sheet (Fig. 4). As a result, the divalent-trivalent metal-based organic-inorganic layered composite having a predetermined functional group such as an epoxy group and comprising both the divalent metal atom M¹ and the trivalent metal atom M² as the central atom of the octahedral sheet is dispersed to a high degree in a cured coating film to be obtained, and is capable of forming a cured coating film having a sufficient hardness and an excellent transparency.

Further, it is not known exactly why, in the divalent-trivalent metal-based organic-inorganic layered composite having a predetermined functional group such as an epoxy group and comprising the divalent metal atom and the trivalent metal atom, if the content of an Al atom that is the trivalent metal atom is too high, the water resistance of the cured coating film is reduced. However, the present inventors speculate as follows. Specifically, the divalent-trivalent metal-based organic-inorganic layered composite having a predetermined functional group such as an epoxy group is formed by subjecting the organoalkoxysilane having a predetermined functional group such as an epoxy group, the divalent metal compound containing a divalent metal atom, and the trivalent metal compound containing a trivalent metal atom to hydrolysis and dehydration condensation. In this event, if a hydrate of aluminium chloride is used as the trivalent metal compound, the aluminium chloride acts as a nucleophilic reagent, and cleaves the epoxy group, the oxetanyl group, and the vinyl group by hydrolysis or solvolysis, presumably. If cleaved, the predetermined functional group such as an epoxy group does not react with a cationic UV curable monomer. Hence, the crosslinking reaction between the organic-inorganic layered composite and the cationic UV curable monomer does not progress, reducing the water resistance of the cured coating film, presumably. Additionally, the cleavage of the epoxy group, the oxetanyl group, and the vinyl group significantly takes place as the amount of the aluminium chloride hydrate increases. Accordingly, if a cationic UV curable coating composition contains a divalent-trivalent metal-based organic-inorganic layered composite having an Al atom content of higher than 67%, the cured coating film has a particularly reduced water resistance, presumably.

### [Advantageous Effects of Invention]

The present invention makes it possible to obtain an organic-inorganic layered composite comprising a divalent metal atom, and being excellent in dispersibility (particularly, re-dispersibility) in an organic material such as an organic solvent, the organic-inorganic layered composite containing a lot of siloxane bonds in comparison with silanol groups. Moreover, it is made possible to obtain a transparent cured coating film comprising the organic-inorganic layered composite excellent in dispersibility, and having a sufficient hardness and an excellent water resistance without impairing an excellent adhesion to a base material.

### [Brief Description of Drawings]

[Fig. 1] Fig. 1 is a schematic drawing showing an example of a layer structure of a divalent-trivalent metal-based organic-inorganic layered composite of the present invention.
[Fig. 2] Fig. 2 is a schematic drawing showing another example of the layer structure of the divalent-trivalent metal-based organic-inorganic layered composite of the present invention.
[Fig. 3] Fig. 3 is a schematic drawing showing an example of a layer structure of a conventional divalent metal-based organic-inorganic layered composite.
[Fig. 4] Fig. 4 is a schematic drawing showing another example of the layer structure of the conventional divalent metal-based organic-inorganic layered composite.
[Fig. 5] Fig. 5 is a schematic drawing showing an example of a layer structure of a smectite-based layered clay mineral.
[Fig. 6] Fig. 6 is a graph showing particle diameter distributions, measured by dynamic light scattering, of layered composites obtained in Examples 1 to 3, 5, 6 and Comparative Examples 1, 3.
[Fig. 7] Fig. 7 is a graph showing ²⁹Si-HD/MAS NMR spectra of layered composites obtained in Examples 2, 4, 6, Comparative Examples 1 to 3, and Reference Example 1.
[Fig. 8] Fig. 8 shows X-ray diffraction patterns of the layered composites obtained in Examples 2, 3, 5, 6, Comparative Examples 1 and 2, and Reference Example 1.
[Fig. 9] Fig. 9 is a graph showing ¹³C-CP/MAS NMR spectra of layered composites obtained in Preparation Examples 1 to 5.
[Fig. 10] Fig. 10 is a graph showing X-ray diffraction patterns of (a) the alicyclic epoxy-Al-Mg-based layered composite (Al: 50%), (b) 3,4-epoxycyclohexenylmethyl-3',4'-epoxycyclohexene carboxylate, and (c) a mixture of the alicyclic epoxy-Al-Mg-based layered composite (Al: 50%) and 3,4-epoxycyclohexenylmethyl-3',4'-epoxycyclohexene carboxylate.
[Fig. 11] Fig. 11 is a graph showing X-ray diffraction patterns of (a) a glycidyl-Mg-based layered composite (Al: 0%), (b) 3,4-epoxycyclohexenylmethyl-3',4'-epoxycyclohexene carboxylate, and (c) a mixture of the glycidyl-Mg-based layered composite (Al: 0%) and 3,4-epoxycyclohexenylmethyl-3',4'-epoxycyclohexene carboxylate.
[Fig. 12] Fig. 12 is a photograph showing a thin film (cured coating film) obtained in Example 11.
[Fig. 13] Fig. 13 is a photograph showing a thin film (cured coating film) obtained in Example 12.
[Fig. 14] Fig. 14 is a photograph showing a thin film (cured coating film) obtained in Example 13.

### [Description of Embodiments]

Hereinafter, the present invention will be described in detail on the basis of preferred embodiments thereof.

### <Divalent-Trivalent Metal-based Organic-Inorganic Layered Composite>

First, a divalent-trivalent metal-based organic-inorganic layered composite of the present invention will be described. The divalent-trivalent metal-based organic-inorganic layered composite of the present invention (hereinafter simply may also be referred to as "organic-inorganic layered composite of the present invention") is represented by the following formula (1):

[R¹ₙSiO_{(4-n)/2}]ₓ[(M¹_{2/2}O)_{y}(M²_{2/3}O)_{z}] [H₂O]_{w} (1)

(in the formula (1), R¹ represents an organic group, M¹ represents a divalent metal atom, M² represents a trivalent metal atom, n is an integer of 1 to 3, x, y, and z are arbitrary numbers that satisfy a condition represented by 0.5 ≤ x/(y+2z/3) ≤ 3, and w represents the number of a structural water molecule).

As described above, in the organic-inorganic layered composite, both the divalent metal atom M¹ and the trivalent metal atom M² coexist as a central atom of an octahedral sheet. Accordingly, the organic-inorganic layered composite shows a high dispersibility (particularly, re-dispersibility) in an organic material such as an organic solvent in comparison with an organic-inorganic layered composite containing only a divalent metal atom.

Among such organic-inorganic layered composites, preferable is a divalent-trivalent metal-based organic-inorganic layered composite, wherein R¹ in the formula (1) is an organic group having at least one functional group of an epoxy group, an oxetanyl group, and a vinyl ether group (hereinafter simply may also be referred to as "organic-inorganic layered composite of the present invention having a predetermined functional group"), from the viewpoint that a transparent cured coating film having a sufficient hardness and an excellent water resistance without impairing an excellent adhesion to a base material can be obtained by adding the organic-inorganic layered composite to a cationic UV curable coating composition.

In the organic-inorganic layered composite of the present invention (including the organic-inorganic layered composite of the present invention having a predetermined functional group. Unless otherwise specified, the same shall apply hereinafter), the number of the trivalent metal atom is 1 to 67% of a total of 100 atoms of the divalent metal atom and the trivalent metal atom. If the number of the trivalent metal atom is smaller than the lower limit, the organic-inorganic layered composite has a low dispersibility (particularly, re-dispersibility) in an organic material or in a cationic UV curable coating composition. On the other hand, if the number of the trivalent metal atom exceeds the upper limit, the content of siloxane bonds is lowered in comparison with silanol groups, and the mechanical strength (for example, hardness) of a tetrahedral sheet is reduced. As a result, the mechanical strength (for example, hardness) of the organic-inorganic layered composite is reduced. Moreover, in a case where an Al atom is used as the trivalent metal atom in the organic-inorganic layered composite having a predetermined functional group, a predetermined functional group such as an epoxy group is cleaved; hence, the crosslinking reaction between the organic-inorganic layered composite having a predetermined functional group and a cationic UV curable monomer does not progress, reducing the water resistance of the cured coating film.

Moreover, in the organic-inorganic layered composite of the present invention, the content of the trivalent metal atom is preferably 66% or less, more preferably 55% or less, further preferably 45% or less, still further preferably 30% or less, and particularly preferably 15% or less. When the content of the trivalent metal atom is within the above range, the content of siloxane bonds is increased in comparison with silanol groups, the mechanical strength (for example, hardness) of the tetrahedral sheet is increased, and a divalent-trivalent metal-based organic-inorganic layered composite excellent in mechanical strength (for example, hardness) tends to be formed. Further, a cured coating film of the present invention tends to have a high surface hardness. Meanwhile, in the organic-inorganic layered composite of the present invention having a predetermined functional group, the content of the trivalent metal atom is preferably 55% or less. This leads to a tendency that the predetermined functional group such as an epoxy group is less likely to be cleaved.

Furthermore, in the organic-inorganic layered composite of the present invention, the content of the trivalent metal atom is most preferably 10% or less. When the content of the trivalent metal atom is 10% or less, the mechanical strength (for example, hardness) of the octahedral sheet is further improved, and the resulting divalent-trivalent metal-based organic-inorganic layered composite is quite excellent in mechanical strength (for example, hardness). In addition, the cured coating film of the present invention tends to have a high surface hardness.

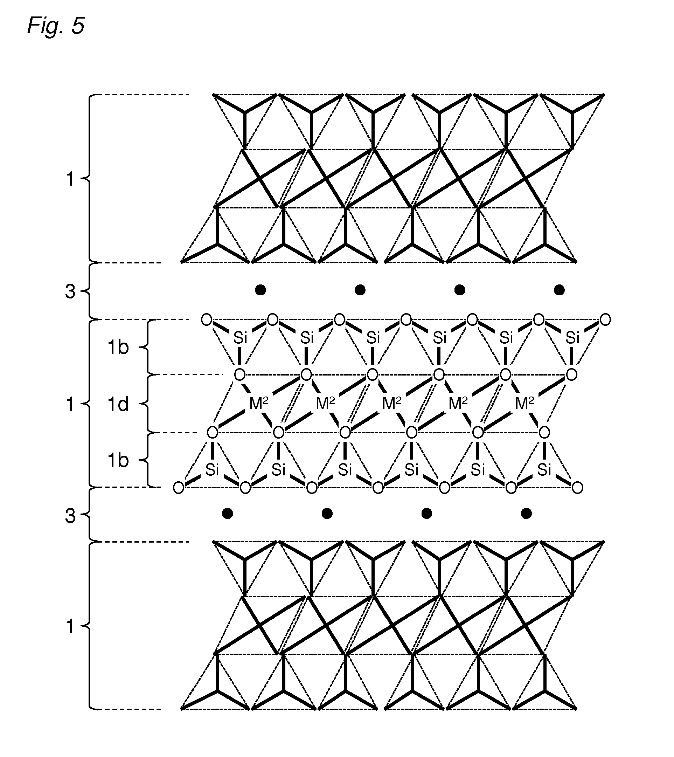

Note that it is not known exactly why the trivalent metal atom content of 10% or less further improves the mechanical strength of the octahedral sheet. However, the present inventors speculate as follows. First, a structure of a conventional trivalent metal-based organic-inorganic layered composite will be described. A conventional trivalent metal-based organic-inorganic layered composite presumably has a layer structure formed from: an inorganic layer constituted of an octahedral sheet containing only a trivalent metal atom as a central atom and a tetrahedral sheet containing a Si atom as a central atom; and an organic layer constituted of an organic group bonded to the Si atom by a covalent bond. In inorganic layer of such a trivalent metal-based organic-inorganic layered composite, the central atom of the octahedral sheet is only a trivalent metal atom. Accordingly, a layer structure thereof is presumably similar to a layered silicate structure constituting a dioctahedral smectite-based layered clay mineral as shown in Fig. 5. It is known that an octahedral sheet in a dioctahedral clay mineral has pores present in a ratio of 1 in 3 octahedral structures. Presumably, an octahedral sheet in a trivalent metal-based organic-inorganic layered composite also has similar pores. In comparison with an octahedral sheet having no pore, an octahedral sheet having such pores has a low crystallinity and a low mechanical strength. Nevertheless, in a dioctahedral clay mineral, the layered silicate structure grows in a layer direction with interlayer cations as shown in Fig. 5, thereby suppressing the reduction in mechanical strength. In contrast, in a trivalent metal-based organic-inorganic layered composite, an organic group is covalently bonded to a silicon atom in a tetrahedral sheet. Accordingly, the inorganic layer is less likely to grow in a layer direction. Although an organic-inorganic layered composite having a small particle diameter is formed, the reduction in mechanical strength of the inorganic layer is not sufficiently suppressed, presumably.

On the other hand, in an inorganic layer of a divalent metal-based organic-inorganic layered composite shown in Fig. 3, the central atom of an octahedral sheet 1c is only a divalent metal atom. Accordingly, a layer structure thereof is presumably similar to a layered silicate structure constituting a trioctahedral smectite-based layered clay mineral. Since an octahedral sheet in a trioctahedral clay mineral has no pore, the octahedral sheet 1c in the divalent metal-based organic-inorganic layered composite presumably does not have pores. In such an octahedral sheet having no pore, a reduction in crystallinity and a reduction in mechanical strength attributed thereto as in an octahedral sheet having pores do not occur. Accordingly, the divalent metal-based organic-inorganic layered composite presumably shows a high mechanical strength in comparison with a trivalent metal-based organic-inorganic layered composite.

In an octahedral sheet 1a of the organic-inorganic layered composite of the present invention, as shown in Figs. 1 and 2, both an octahedral structure having the trivalent metal atom M² as a central metal and an octahedral structure having the divalent metal atom M¹ as a central atom presumably coexist. In other words, in the octahedral sheet 1a in the organic-inorganic layered composite of the present invention both an octahedral sheet having pores and an octahedral sheet having no pore presumably coexist in a surface direction. As described above, an octahedral sheet having no pore has a high crystallinity and a high mechanical strength in comparison with an octahedral sheet having pores. Accordingly, in the octahedral sheet 1a of the organic-inorganic layered composite of the present invention in which these coexist in the surface direction, as the proportion of the octahedral sheet having no pore increases, the crystallinity is increased, and thus the mechanical strength is increased, presumably. In addition, when the proportion of the octahedral sheet having no pore is 90% or more, that is, when the content of the trivalent metal atom is 10% or less, such an effect is significantly demonstrated and the mechanical strength of the octahedral sheet 1a is significantly improved, presumably.

In the formula (1) according to the present invention, M¹ represents a divalent metal atom. Examples of such a divalent metal atom include magnesium (Mg), nickel(II) (Ni(II)), cobalt(II) (Co(II)), copper(II) (Cu(II)), manganese (Mn), iron(II) (Fe(II)), lithium (Li), vanadium(II) (V(II)), zirconium (Zr), and zinc (Zn). Among these, from the viewpoint that the organic-inorganic layered composite of the present invention has a high dispersibility (particularly, re-dispersibility) and a small dispersed-particle diameter in an organic material or in a cationic UV curable coating composition, magnesium (Mg) and nickel(II) (Ni(II)) are preferable, and magnesium (Mg) is particularly preferable. The organic-inorganic layered composite of the present invention may comprise one of such divalent metal atoms alone, or two or more thereof.

Moreover, in the formula (1), M² represents a trivalent metal atom. Examples of such a trivalent metal atom include aluminium (Al) and iron (III) (Fe(III)). Among these, aluminium (Al) is preferable from the viewpoint that the organic-inorganic layered composite of the present invention has a high dispersibility (particularly, re-dispersibility) and a small dispersed-particle diameter in an organic material or in a cationic UV curable coating composition. The organic-inorganic layered composite of the present invention may comprise one of such trivalent metal atoms alone, or two or more thereof.

In the formula (1) according to the present invention, R¹ represents an organic group, which is derived from an organoalkoxysilane used in a method for producing a divalent-trivalent metal-based organic-inorganic layered composite of the present invention to be described later. The number of carbon atoms in such an organic group is not particularly limited, but is for example preferably 3 to 18, and more preferably 3 to 12.

Such an organic group is not particularly limited. Examples thereof include hydrocarbon groups such as alkyl groups (for example, a methyl group, an ethyl group, a propyl group, a butyl group, a hexyl group, an octyl group, a decyl group, an undecyl group, a dodecyl group, a tridecyl group, a hexadecyl group, an octadecyl group), alkenyl groups (for example, a vinyl group), and aryl groups (for example, a phenyl group), and the like.

Further, these organic groups are preferably ones substituted with a functional group such as an epoxy group (for example, a glycidoxy group, an epoxycyclohexyl group, a glycidyl group), an oxetanyl group, a vinyl ether group, a (meth)acryloxy group, a phenyl group, an amino group, a phenoxy group, an acetyl group, a ureido group, a halogen atom (for example, a chlorine atom), a mercapto group, an isothiouronium group, an acid anhydride group (for example, a succinic anhydride group), a nitrogen-containing heterocyclic ring (for example, an imidazole ring, an imidazoline ring, a pyridine ring, a pyrrole ring, an aziridine ring, a triazole ring), a nitro group, an amide group, a carbomethoxy group, an aldehyde group, a ketone group, a hydroxyl group, a sulfonyl group, a sulfur-containing heterocyclic ring (for example, a thiophene ring), a cyano group, and an isocyanate group. The organic-inorganic layered composite of the present invention may comprise one of such organic groups alone, or two or more thereof.

For example, in a case where the organic-inorganic layered composite of the present invention is further combined with a radical polymerization type resin, an organic group having a (meth)acryloxy group as a substituent is preferable among the organic groups having such a functional group.

Furthermore, when the organic-inorganic layered composite of the present invention is added to a cationic UV curable coating composition, an organic group having at least one functional group of an epoxy group, an oxetanyl group, and a vinyl ether group is preferable, and an organic group formed by bonding at least one of these functional groups to the aforementioned hydrocarbon group is more preferable. Such organic groups having a predetermined functional group are derived from an organoalkoxysilane having a predetermined functional group used in the method for producing an organic-inorganic layered composite of the present invention to be described later. As the organic-inorganic layered composite of the present invention having a predetermined functional group comprises the organic group having a predetermined functional group such as an epoxy group, a crosslinking structure can be formed with a cationic UV curable monomer. As a result, a cured coating film excellent in water resistance is obtained. Examples of the epoxy group include a glycidyl group, an alicyclic epoxy group, and the like. Among these, an alicyclic epoxy group is preferable from the viewpoint that the reactivity with the cationic UV curable monomer is high.

In the formula (1), x, y, and z can be determined on the basis of amounts of the silicon atom, the divalent metal atom, and the trivalent metal atom contained in raw materials used in producing the organic-inorganic layered composite of the present invention. x/(y+2z/3) represents a molar ratio between the Si atom and the metal atoms (the divalent metal atom and the trivalent metal atom) incorporated in the organic-inorganic layered composite of the present invention.

Additionally, the structural water is derived from a hydroxyl group constituting a silanol group in the tetrahedral sheet, a hydroxyl group bonded to the divalent or trivalent metal atom in the octahedral sheet, and so forth. The presence can be confirmed by a nuclear magnetic resonance (NMR) measurement. Note that although the value of w is an arbitrary number not limited to an integer, since the tetrahedral structure may contain a silanol group, it is preferable to satisfy a condition represented by [(y+z)/(y+2z/3)]-1 ≤ w/(y+2z/3) ≤ [(y+z)/(y+2z/3)]+(1/2). w/(y+2z/3) represents a molar ratio between the structural water and the metal atoms (the divalent metal atom and the trivalent metal atom).

Such an organic-inorganic layered composite of the present invention is excellent in dispersibility (particularly, re-dispersibility) in an organic material such as an organic solvent. For example, the organic-inorganic layered composite of the present invention can be dispersed in an organic solvent in such a manner that the maximum dispersed-particle diameter is preferably 100 nm or smaller, more preferably 75 nm or smaller, and particularly preferably 50 nm or smaller. Note that the maximum dispersed-particle diameter can be determined as a maximum particle diameter in a particle diameter distribution of the organic-inorganic layered composite of the present invention dispersed in an organic solvent, the particle diameter distribution measured by dynamic light scattering.

Next, a method for producing a divalent-trivalent metal-based organic-inorganic layered composite of the present invention (hereinafter may also be referred to as "method for producing an organic-inorganic layered composite of the present invention") will be described. The organic-inorganic layered composite of the present invention can be produced through a preparation step, a reaction step, and a removal step to be described below.

### [Preparation Step]

First, in the preparation step according to the present invention, an organoalkoxysilane, a divalent metal compound containing a divalent metal atom, and a trivalent metal compound containing a trivalent metal atom are dissolved in a first solvent, which is a polar solvent, to thereby prepare a raw-material solution containing a silicon atom, the divalent metal atom, and the trivalent metal atom. It should be noted that the term "dissolving" in this step includes such a state in which one or two or more of the organoalkoxysilane, the divalent metal compound, and the trivalent metal compound are dispersed as particles in the first solvent. Moreover, when the organic-inorganic layered composite of the present invention having a predetermined functional group is produced, it is preferable to use, as the organoalkoxysilane, an organoalkoxysilane having at least one functional group of an epoxy group, an oxetanyl group, and a vinyl ether group (hereinafter may also be referred to as "organoalkoxysilane having a predetermined functional group").

The organoalkoxysilane used in the present invention is not particularly limited, as long as it is represented by the following formula (2):

R¹ₙSi(OR²)₍₄₋ₙ₎ (2)

(in the formula (2), R¹ represents an organic group, OR² represents an alkoxy group, and n is an integer of 1 to 3). Meanwhile, the organoalkoxysilane having a predetermined functional group is preferably such an organoalkoxysilane that R¹ in the formula (2) is an organic group having at least one functional group of an epoxy group, an oxetanyl group, and a vinyl ether group. A Si atom constituting these organoalkoxysilanes (including the organoalkoxysilane having a predetermined functional group. Unless otherwise specified, the same shall apply hereinafter) becomes the Si atom constituting the organic-inorganic layered composite of the present invention (preferably, the Si atom that is the central atom of the tetrahedral sheet in the organic-inorganic layered composite of the present invention), and the organic group R¹ in the formula (2) becomes the organic group R¹ constituting the organic layer in the organic-inorganic layered composite of the present invention.

In the formula (2), OR² represents an alkoxy group. Such an alkoxy group is not particularly limited, but is preferably an alkoxy group having 1 to 3 carbon atoms, such as a methoxy group and an ethoxy group. The organoalkoxysilane may contain one of such alkoxy groups alone, or two or more thereof.

Such organoalkoxysilanes are preferably epoxy-based alkoxysilanes (for example, glycidyl-based alkoxysilanes, alicyclic epoxy-based alkoxysilanes), oxetane-based alkoxysilanes, vinyl ether-based alkoxysilanes, (meth)acryl-based alkoxysilanes, vinyl-based alkoxysilane, alkyl-based alkoxysilanes, aromatic alkoxysilanes, amino-based alkoxysilanes (for example, alkoxysilanes having -NH₂, -NHCH₃, or -N(CH₃)₂) and alkoxysilylamines, ureido-based alkoxysilanes, halogenated alkoxysilanes, mercapto-based alkoxysilanes, isothiouronium salts having an alkoxysilyl group, acid anhydrides having an alkoxysilyl group, organoalkoxysilanes having a nitrogen-containing heterocyclic ring (for example, an imidazole ring, an imidazoline ring, a pyridine ring, a pyrrole ring, an aziridine ring, a triazole ring, and the like), organoalkoxysilanes having a nitro group (-NO₂), organoalkoxysilanes having a carbomethoxy group (-COOCH₃), organoalkoxysilanes having an aldehyde group (-CH=O), organoalkoxysilanes having a ketone group (-(C=O)-R), organoalkoxysilanes having a hydroxyl group (-OH), organoalkoxysilanes having a sulfonyl group (-S(=O)₂-), organoalkoxysilanes having a sulfur-containing heterocyclic ring (for example, a thiophene ring), organoalkoxysilanes having a cyano group (-NC), organoalkoxysilanes having an isocyanate group (-N=C=O), and the like. One of such organoalkoxysilanes may be used alone, or two or more thereof may be used in combination.

For example, in the case where the organic-inorganic layered composite of the present invention is further combined with a radical polymerization type resin, (meth)acryl-based alkoxysilanes are more preferable, and 3-methacryloxypropyl trimethoxysilane is particularly preferable among such organoalkoxysilanes.

Moreover, examples of the organoalkoxysilane having a predetermined functional group include alicyclic epoxy-based organoalkoxysilanes such as alkoxysilanes having an epoxycyclohexyl group represented by the following formula (2a), glycidyl-based organoalkoxysilanes such as alkoxysilanes having a glycidyl group represented by the following formula (2b), oxetane-based organoalkoxysilanes such as alkoxysilanes having an oxetanyl group represented by the following formula (2c), vinyl ether-based organoalkoxysilanes such as alkoxysilanes having a vinyloxy group represented by the following formula (2d), and the like. Among these, alicyclic epoxy-based organoalkoxysilanes represented by the following formula (2a) are preferable from the viewpoint that the reactivity between the organic-inorganic layered composite of the present invention having a predetermined functional group and the cationic UV curable monomer is high, and the water resistance of the cured coating film is improved. One of such organoalkoxysilanes having a predetermined functional group may be used alone, or two or more thereof may be used in combination.

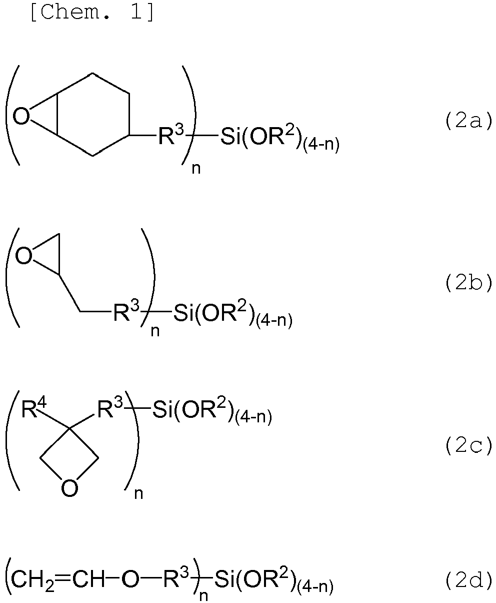

In the formulas (2a) to (2d), OR² is synonymous with OR² in the formula (2), R³ represents an organic group having 1 to 8 carbon atoms optionally having an ether bond, R⁴ represents an organic group having 1 to 3 carbon atoms, and n is synonymous with n in the formula (2).

Examples of the epoxycyclohexyl group-containing alkoxysilanes represented by the formula (2a) include 2-(3,4-epoxycyclohexyl)ethyltrimethoxysilane, 2-(3,4-epoxycyclohexyl)ethyltriethoxysilane, 2-(3,4-epoxycyclohexyl)ethylmethyldiethoxysilane, and the like. Examples of the glycidyl group-containing alkoxysilanes represented by the formula (2b) include 3-glycidyloxypropyltrimethoxysilane, 3-glycidyloxypropyltriethoxysilane, 3-glycidyloxypropylmethyldiethoxysilane, and the like.

Moreover, examples of the oxetanyl group-containing alkoxysilanes represented by the formula (2c) include alkoxysilanes described in paragraphs [0040] to [0041] of Japanese Unexamined Patent Application Publication No. 2000-26730 such as [(3-methyloxetan-3-yl)-methyloxypropyl]-trimethoxysilane, [(3-methyloxetan-3-yl)-methyloxypropyl]-triethoxysilane, [(3-methyloxetan-3-yl)-methyloxypropyl]-methyldiethoxysilane, 2-[(3-methyloxetan-3-yl)-methyloxypropyl]-ethoxyethyltrimethoxysilane, 2-[(3-methyloxetan-3-yl)-methyloxypropyl]-ethoxyethyltriethoxysilane, and 2-[(3-methyloxetan-3-yl)-methyloxypropyl]-ethoxyethylmethyldiethoxysilane. Examples of the vinyl ether group-containing alkoxysilanes represented by the formula (2d) include 2-(vinyloxy)ethyltrimethoxysilane, 2-(vinyloxy)ethyltriethoxysilane, 2-(vinyloxy)ethylmethyldiethoxysilane, and the like.

Further, in order to adjust the amount of the organic group incorporated in the organic-inorganic layered composite of the present invention, an alkoxysilane containing no organic group can be used in combination with the organoalkoxysilane, as necessary. Examples of such an alkoxysilane containing no organic group include tetramethoxysilane (TMOS), tetraethoxysilane (TEOS), tetra-n-propoxysilane, tetraisopropoxysilane, tetra-n-butoxysilane, tetra-sec-butoxysilane, tetra-tert-butoxysilane, and the like. One of such alkoxysilanes may be used alone, or two or more thereof may be used in combination. Incidentally, when the alkoxysilane containing no organic group is used in a large proportion, an organic-inorganic layered composite having more inorganic properties is likely to be formed. Such an organic-inorganic layered composite having more inorganic properties has a low affinity for an organic material such as an organic solvent, and is not preferable as a filler for resin coating films and resin molded articles. In addition, if an organic-inorganic layered composite having more inorganic properties is formed, a second solvent used in the removal step to be described later is limited to certain types. For this reason, it is difficult to produce an organic-inorganic layered composite having more inorganic properties by the method for producing an organic-inorganic layered composite of the present invention in some cases. Thus, when the alkoxysilane containing no organic group is used in the method for producing an organic-inorganic layered composite of the present invention, a molar ratio between the organoalkoxysilane and the alkoxysilane containing no organic group (organoalkoxysilane:alkoxysilane containing no organic group) is preferably 50:50 or higher, more preferably 70:30 or higher.

Furthermore, in order to adjust the amount of the functional group incorporated in the organic-inorganic layered composite of the present invention having a predetermined functional group, the alkoxysilane containing no organic group or an organoalkoxysilane having no functional group can be used in combination with the organoalkoxysilane having a predetermined functional group, as necessary. Examples of the organoalkoxysilane having no functional group include alkyl-based alkoxysilanes, aromatic alkoxysilanes, and the like. One of such alkoxysilanes may be used alone, or two or more thereof may be used in combination. Incidentally, when the organoalkoxysilane having no functional group or the alkoxysilane containing no organic group is used in a large proportion, this reduces the number of sites where the organic-inorganic layered composite of the present invention having a predetermined functional group reacts with the cationic UV curable monomer, and the water resistance of the cured coating film tends to be reduced. Thus, when the organoalkoxysilane having no functional group or the alkoxysilane containing no organic group is used in preparing the organic-inorganic layered composite of the present invention having a predetermined functional group, the amount of these alkoxysilanes used (a total amount of these, if used in combination) is preferably 50% by mol or less of the amount of all the alkoxysilanes (a sum of the organoalkoxysilane having a predetermined functional group, the organoalkoxysilane having no functional group, and the alkoxysilane containing no organic group).

The divalent metal compound used in the present invention is not particularly limited, as long as the metal compound contains the divalent metal atom described above. From the viewpoint of the reactivity with the organoalkoxysilane and the trivalent metal compound, preferable are inorganic salts, organic salts, and alkoxides of the divalent metal atom. The inorganic salts are preferably chlorides, sulfides, sulfates, nitrates, and the like. The organic salts are preferably acetates and the like. The alkoxides are preferably methoxides, ethoxides, propoxides, butoxides, and the like. One of such divalent metal compounds may be used alone, or two or more thereof may be used in combination.

The trivalent metal compound used in the present invention is not particularly limited, as long as the metal compound contains the trivalent metal atom described above. From the viewpoint of the reactivity with the organoalkoxysilane and the divalent metal compound, preferable are inorganic salts, organic salts, and alkoxides of the trivalent metal atom. The inorganic salts are preferably chlorides, sulfides, sulfates, nitrates, and the like. The organic salts are preferably acetates and the like. The alkoxides are preferably methoxides, ethoxides, propoxides, butoxides, and the like. One of such trivalent metal compounds may be used alone, or two or more thereof may be used in combination.

In the preparation step according to the present invention, such organoalkoxysilane, divalent metal compound, and trivalent metal compound are dissolved in a first solvent, which is a polar solvent, to thereby prepare a raw-material solution. As the first solvent used in this event, any solvent can be used, as long as it is polar solvent, including inorganic polar solvents (for example, water, inorganic acids), organic polar solvents (for example, alcohols, acetone, organic acids), and mixture solvents of two or more of these. Among these, preferable are water, water-soluble organic solvents (for example, lower alcohols such as chain alcohols having 1 to 5 carbon atoms, acetone), and mixture solvents of two or more of these.

Moreover, in the preparation step according to the present invention, the raw-material solution is prepared in such a manner that an atomic ratio of the silicon atom to the metal atoms contained in the resulting raw-material solution (the number of the silicon atom/a total number of the divalent metal atom and the trivalent metal atom. Hereinafter may also be expressed as "the number of the silicon atom/the number of the metal atoms") is from 0.5 to 3 both inclusive. By adjusting the atomic ratio of the silicon atom to the metal atoms in the raw-material solution within the above range, it is possible to form the inorganic layer having a 2:1-type or 1:1-type phyllosilicate structure constituted of the tetrahedral sheet having the silicon atom as the central atom and the octahedral sheet having the divalent and trivalent metal atoms as the central atom. Particularly, by adjusted the number of the silicon atom/the number of the metal atoms from 1 to 3 both inclusive, it is possible to form the inorganic layer having the 2:1-type phyllosilicate structure, and by adjusting from 0.5 to 1 both inclusive, it is possible to form the inorganic layer having the 1:1-type phyllosilicate structure.

Additionally, the organic-inorganic layered composite of the present invention may encapsulate core particles, each of which is one organic molecule or an assembly of organic molecules, to thus produce composite particles comprising the core particles and shell layers constituted of the organic-inorganic layered composite of the present invention encapsulating the core particles. In order to obtain such composite particles, for example, in the preparation step according to the present invention, the organoalkoxysilane, the divalent metal alkoxide, the trivalent metal alkoxide, and organic molecules such as ultraviolet-ray absorbing molecules or dye molecules may be dissolved in the first solvent to prepare the raw-material solution. In such a raw-material solution, the organoalkoxysilane coordinates to the divalent and trivalent metal alkoxides prior to reactions, and further the metal alkoxides to which the organoalkoxysilane coordinates associate around the organic molecules to form associates. Then, such associates are allowed to react to thus obtain the composite particles comprising the core particles and the shell layers constituted of the organic-inorganic layered composite of the present invention encapsulating the core particles. Moreover, such composite particles can be produced without particular problems, if the number of the silicon atom/the number of the metal atoms in the raw-material solution is from 0.5 to 3 both inclusive. Meanwhile, such composite particles can be readily produced by adjusting the number of the silicon atom/the number of the metal atoms from 1 to 3 both inclusive.

Furthermore, in the preparation step according to the present invention, the raw-material solution is prepared in such a manner that the number of the trivalent metal atom contained in the resulting raw-material solution is 1 to 67% of a total of 100 atoms of the divalent metal atom and the trivalent metal atom. By adjusted the number of the trivalent metal atom within the above range, it is possible to increase the content of siloxane bonds in comparison with silanol groups. As a result, the mechanical strength (for example, hardness) of the tetrahedral sheet is increased, and the mechanical strength (for example, hardness) of the organic-inorganic layered composite of the present invention is also increased. On the other hand, if the number of the trivalent metal atom exceeds the upper limit, in a case where an Al atom is used as the trivalent metal atom for producing the organic-inorganic layered composite having a predetermined functional group, the predetermined functional group such as an epoxy group is cleaved, and the crosslinking reaction with the cationic UV curable monomer does not progress, reducing the water resistance of the cured coating film.

In addition, in the preparation step according to the present invention, the content of the trivalent metal atom is preferably adjusted to 66% or less, more preferably adjusted to 55% or less, further preferably adjusted to 45% or less, still further preferably adjusted to 30% or less, and particularly preferably adjusted to 15% or less. Thereby, the content of siloxane bonds can be increased in comparison with silanol groups, the mechanical strength (for example, hardness) of the tetrahedral sheet is increased, and a divalent-trivalent metal-based organic-inorganic layered composite excellent in mechanical strength (for example, hardness) tends to be formed. Further, the cured coating film of the present invention tends to have a high surface hardness. Additionally, when the organic-inorganic layered composite of the present invention having a predetermined functional group is produced, the content of the trivalent metal atom is preferably adjusted to 55% or less. This leads to a tendency that the predetermined functional group such as an epoxy group is less likely to be cleaved.

Furthermore, in the preparation step according to the present invention, the content of the trivalent metal atom is most preferably adjusted to 10% or less. Thereby, the mechanical strength (for example, hardness) of the octahedral sheet is further improved, and a divalent-trivalent metal-based organic-inorganic layered composite quite excellent in mechanical strength (for example, hardness) can be obtained. In addition, the cured coating film of the present invention tends to have a higher surface hardness.

### [Reaction Step]

Next, in the reaction step according to the present invention, the organoalkoxysilane, the divalent metal compound, and the trivalent metal compound are subjected to hydrolysis and dehydration condensation, to thereby synthesize the divalent-trivalent metal-based organic-inorganic layered composite comprising the silicon atom, the divalent metal atom, and the trivalent metal atom. When water is present in the raw-material solution prepared in the preparation step, the organoalkoxysilane, the divalent metal compound, and the trivalent metal compound undergo the hydrolysis and the dehydration condensation. On the other hand, when no water is present in the raw-material solution, the hydrolysis reaction and the dehydration condensation reaction progress by adding water to the raw-material solution. The amount of such water to be added is not particularly limited, as long as the amount enables sufficient hydrolysis of the organoalkoxysilane, the divalent metal compound, and the trivalent metal compound.

Moreover, in the reaction step according to the present invention, a pH of the raw-material solution is preferably adjusted to an alkaline level. Thereby, the reactions of the organoalkoxysilane, the divalent metal compound, and the trivalent metal compound can be promoted. Such pH adjustment is particularly effective in a case where an inorganic salt and/or an organic salt of the divalent and trivalent metal atoms are used as the divalent and trivalent metal compounds. An alkali added in the pH adjustment is not particularly limited, but it is preferable to add sodium hydroxide, potassium hydroxide, ammonia, or the like in the form of an aqueous solution. The pH of the raw-material solution adjusted in this manner is not particularly limited, as long as crystallization occurs at a desired rate or higher and the pH is not at such a strong alkaline level that impairs the organic group. Meanwhile, such a pH cannot be defined unambiguously because it depends on the types of the organoalkoxysilane and the divalent and trivalent metal compounds. Nevertheless, the pH is preferably adjusted to approximately 8 to 10.

When water or water and the alkali are present in the raw-material solution as described above, the divalent and trivalent metal compounds first undergo the hydrolysis or turn into metal hydroxides among the organoalkoxysilane and the divalent and trivalent metal compounds. In either case, -M¹-OH and -M²-OH are formed. The crystalline structure of the hydrolysates or the metal hydroxides formed in this event is presumably an octahedral structure containing the divalent metal atom and the trivalent metal atom as the central atom. As the octahedral structure grows, the octahedral sheet is formed, presumably. After that, -M¹-OH and -M²-OH promote the hydrolysis of the organoalkoxysilane, and undergo the dehydration condensation together with a silanol group (Si-OH) formed by the hydrolysis. Thereby, bonds represented by R¹-Si-O-M¹ and R¹-Si-O-M² are formed. In this event, a tetrahedral structure containing the Si atom as the central atom is formed in a state of being bonded to the octahedral structure. The tetrahedral structure grows while following the growth of the octahedral structure, and the tetrahedral sheet is formed, presumably.

Such hydrolysis reaction and dehydration condensation reaction sufficiently progress at a temperature around room temperature. However, the reactions may be carried out at a certain high temperature that does not impair the organic group. Meanwhile, depending on the conditions, such reactions are immediately completed in some cases, or require aging for a certain period (for example, approximately 1 to 2 days) in some cases.

An initial content of the raw materials of the organic-inorganic layered composite of the present invention (the organoalkoxysilane, the divalent metal compound, and the trivalent metal compound, as well as the alkoxysilane containing no organic group and the organoalkoxysilane having no functional group, if used) in the raw-material solution (including one containing water or the alkali, if these are added) is not particularly limited. Meanwhile, such an initial content cannot be defined unambiguously because it depends on the molecular weights of the organoalkoxysilane and the divalent and trivalent metal compounds. Nevertheless, a total amount of the raw materials is preferably 25% by mass or less, more preferably 15% by mass or less, and further preferably 10% by mass or less, relative to 100% by mass of a total amount of the raw-material solution. From the viewpoint that a fine divalent-trivalent metal-based organic-inorganic layered composite is obtained with a volume average particle diameter of 10 to 500 nm, 5% by mass or less is particularly preferable.

### [Removal Step]

Next, to a solution resulting from the reaction step, a second solvent, which does not dissolve compatibly with the solution, is added, to thereby dissolve the organic-inorganic layered composite of the present invention in the second solvent. Since the solution resulting from the reaction step and the second solvent are separated into two phases, removing a solution, which does not dissolve compatibly with the second solvent makes it possible to recover the organic-inorganic layered composite of the present invention in a state of being dissolved in the second solvent.

The second solvent is not particularly limited, as long as it does not dissolve compatibly with the solution resulting from the reaction step and is capable of dissolving the organic-inorganic layered composite of the present invention. For example, in a case where water, a water-soluble organic solvent, or a mixture solvent of these is used as the first solvent, the solution resulting from the reaction step is an aqueous solution or a water-soluble solution. Accordingly, an organic solvent used as a solvent extracted from the aqueous solution or the water-soluble solution can be used as the second solvent. Examples of such an organic solvent include aliphatic hydrocarbons such as n-pentane, 2-methylbutane, 2,2-dimethylpropane, n-hexane, 2-methylpentane, 3-methylpentane, 2,2-dimethylbutane, 2,3-dimethylbutane, n-heptane, 2-methylhexane, 3-methylhexane, 2,3-dimethylpentane, 2,4-dimethylpentane, n-octane, 2,2,3-trimethylpentane, 2,2,4-trimethylpentane, n-nonane, and n-decane; alicyclic hydrocarbons such as cyclopentane, methylcyclopentane, cyclohexane, methylcyclohexane, ethylcyclohexane, and cyclooctane; aromatic hydrocarbons such as toluene and xylene; ethers such as diethyl ether, diisopropyl ether, and dibutyl ether; esters such as triethyl orthoformate, methyl acetate, ethyl acetate, and butyl acetate; and halogenated hydrocarbons such as chloroform, tetrachloride, 1,2-dichloroethane, 1,2-dichloroethylene, 1,1,2,2-tetrachloroethane, chlorobenzene, trichloroethylene, and tetrachloroethylene. One of such organic solvents may be used alone, or two or more thereof may be used in combination.

Since comprising a hydrophilic inorganic layer and a hydrophobic organic layer, the organic-inorganic layered composite of the present invention functions like a surfactant and tends to hinder the phase separation between the solution resulting from the reaction step and the second solvent. The more hydrophobic the second solvent is, the more markedly such a tendency appears. Accordingly, the second solvent is preferably an organic solvent such as ethyl acetate, toluene, and chloroform, which slightly dissolves compatibly with water and water-soluble solvents.

In the removal step according to the present invention, after the second solvent is added to the solution resulting from the reaction step, the mixture is sufficiently mixed and left standing to an equilibrium state. Thereby, the solution is separated into two layers of an upper layer and a lower layer. For example, in a case where water, a water-soluble organic solvent, or a mixture solvent of these is used as the first solvent, usually, the aqueous solution or the water-soluble solution is situated in the lower layer, while a solution including the second solvent is situated in the upper layer. In this event, in the solution in the upper layer including the second solvent, the organic-inorganic layered composite of the present invention is mainly present as a solute. On the other hand, in the aqueous solution or the water-soluble solution in the lower layer, impurities (for example, byproducts formed during the pH adjustment, an organic-inorganic composite including inorganic components more than necessary, unreacted substances, and so forth) are present as a solute. Incidentally, in a case where the second solvent is a solvent like a halogenated solvent having a heavier specific gravity than water, the aqueous solution or the water-soluble solution is situated in the upper layer, while the solution including the second solvent is situated in the lower layer.

After that, removing the aqueous solution or the water-soluble solution makes it possible to recover the organic-inorganic layered composite of the present invention in a state of being dissolved in the second solvent. The solution recovered in this manner can be used directly for a coating composition or a raw material for molding, depending on the type of the organic group constituting the organic-inorganic layered composite of the present invention. Moreover, adding an organic monomer to the solution containing the organic-inorganic layered composite of the present invention or mixing the solution with an existing coating composition or a raw material for molding makes is possible to obtain a coating composition or a raw material for molding, which comprise the organic-inorganic layered composite of the present invention as a filler. Furthermore, in a case where the organic group constituting the organic-inorganic layered composite of the present invention has at its terminal end a reactive group capable of reacting with (capable of bonding to) an organic group of another organic-inorganic composite, if these organic groups react with each other, the organic-inorganic layered composite of the present invention is bonded to the other organic-inorganic composite. Thus, a coating film or a molded article can be formed.

Note that, in the removal step according to the present invention, the same procedure (extraction operation) may be repeated several times by altering the type of the second solvent, or the like, as necessary.

### [Recovery Step]

Additionally, the method for producing an organic-inorganic layered composite of the present invention may comprise a recovery step of removing the second solvent from the solution containing the organic-inorganic layered composite of the present invention obtained in the removal step, to thereby recover the organic-inorganic layered composite of the present invention in the state of a solid (preferably powder, more preferably fine particles). The method for removing the second solvent includes a method for evaporating the second solvent using an evaporator and so on. Particularly, in a case where ethyl acetate, toluene, chloroform, or a mixture solvent of two or more of these is used as the second solvent, the second solvent can be evaporated without exposing the organic-inorganic layered composite of the present invention to high temperature.

The organic-inorganic layered composite of the present invention recovered by the recovery step may be added as a filler to an existing coating composition or a raw material for molding, or may be dispersed in a solvent for use as a coating composition or a raw material for molding. Alternatively, an organic monomer may be added to the composite. In either case, the organic-inorganic layered composite of the present invention can be favorably dispersed.

Next, a cationic UV curable coating composition of the present invention will be described. The cationic UV curable coating composition of the present invention comprises: the divalent-trivalent metal-based organic-inorganic layered composite of the present invention, wherein R¹ in the formula (1) is an organic group having at least one functional group of an epoxy group, an oxetanyl group, and a vinyl ether group; a cationic UV curable monomer; and a cationic photopolymerization initiator.

### (Cationic UV Curable Monomer)

The cationic UV curable monomer used in the present invention is not particularly limited, but a monomer used in conventional cationic UV curable coating compositions can be used. Such a cationic UV curable monomer has advantages that (i) the curing is less likely to be inhibited by oxygen, and (ii) the curing reaction progresses even after light irradiation, and further an advantage that when a ring-opening polymerization type monomer is used, (iii) it can reduce the volume shrinkage at the time of curing, making the residual stress of the cured coating film small, and a cured coating film having an excellent adhesion is obtained. Hence, even when the cationic UV curable coating composition of the present invention is photo-cured in air, it is possible to obtain a cured coating film having a high adhesion to a base material and excellent transparency and surface hardness.

Examples of such a cationic UV curable monomer include epoxy compounds, oxetane compounds, vinyl ether compounds, styrene-based compounds, and the like. One of these cationic UV curable monomers may be used alone, or two or more thereof may be used in combination. Additionally, from the viewpoint that the cationic UV curable coating composition of the present invention excellent in photocurability is obtained, preferable among such cationic UV curable monomers are alicyclic epoxy compounds (more preferably, one represented by the following formula (i)) and oxetane compounds (more preferably, ones represented by the following formulas (ii) to (v)). Note that, in the formula (v), n is an integer of 1 to 3.

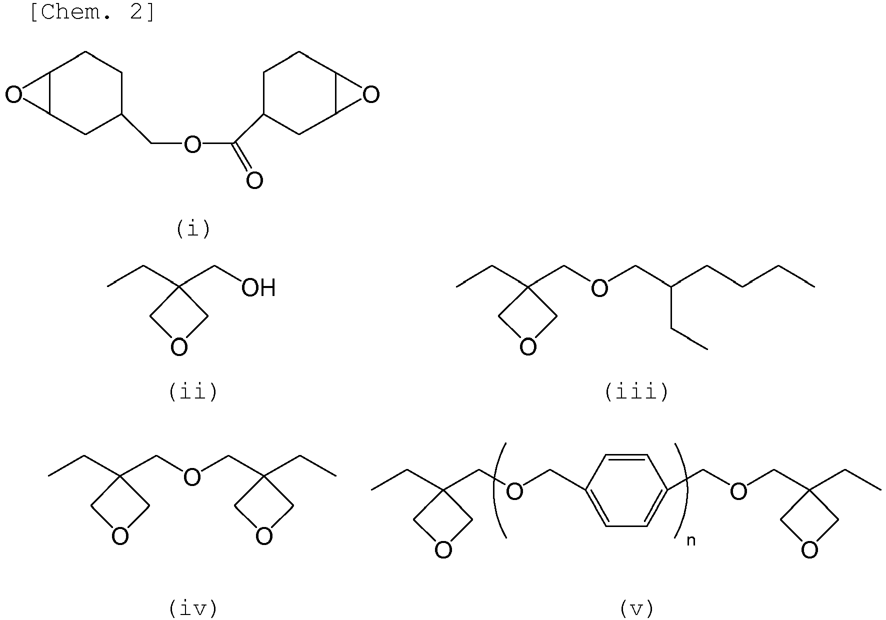

### (Cationic Photopolymerization Initiator)

The cationic photopolymerization initiator used in the present invention is not particularly limited, but a cationic photopolymerization initiator used in conventional cationic UV curable coating compositions can be used. As such a cationic photopolymerization initiator, onium salts such as iodonium salts and sulfonium salts are preferable. Examples of a counter anion in such onium salts include PF₆⁻, SbF₆⁻, AsF₆⁻, B(C₆F₅)₄⁻, and the like.

Specific examples of such a cationic photopolymerization initiator include commercially-available products such as "CYRACURE UVI-6974", "CYRACURE UVI-6990", and "CYRACURE UVI-6992" manufactured by The Dow Chemical Company; "ADEKA OPTOMER SP-150", "ADEKA OPTOMER SP-152", "ADEKA OPTOMER SP-170", and "ADEKA OPTOMER SP-172" manufactured by ADEKA CORPORATION; "CPI-100P", "CPI-101A", "CPI-110P", "CPI-110A", "CPI-200K", and "CPI-210S" manufactured by San-Apro Ltd.; "TS-91" manufactured by SANWA Chemical Co., Ltd.; "Esacure1187" and "Esacure1188" manufactured by Lamberti S.p.A. (hereinabove, aryl sulfonium salts); "IRGACURE 250" manufactured by Ciba Specialty Chemicals Inc.; "RP-2074" manufactured by Rhodia (hereinabove, aryl iodonium salts); and the like.

### <Cationic UV Curable Coating Composition>

The cationic UV curable coating composition of the present invention comprises: the organic-inorganic layered composite of the present invention having a predetermined functional group; the cationic UV curable monomer; and the cationic photopolymerization initiator. Further, the cationic UV curable coating composition of the present invention may comprise a known additive such as an anti degradation agent in such a range as not to impair the effects of the present invention.

In the cationic UV curable coating composition of the present invention, the content of the organic-inorganic layered composite of the present invention having a predetermined functional group is preferably 10 to 80 parts by mass, more preferably 10 to 50 parts by mass, relative to 100 parts by mass of a total amount thereof with the cationic UV curable monomer. If the content of the organic-inorganic layered composite of the present invention having a predetermined functional group is less than the lower limit, there is a tendency that the surface hardness of the cured coating film is not sufficiently improved. On the other hand, if the content exceeds the upper limit, the smoothness of the cured coating film tends to be impaired.

Moreover, in the cationic UV curable coating composition of the present invention, the content of the cationic photopolymerization initiator is preferably 1 to 10 parts by mass, more preferably 2 to 5 parts by mass, relative to 100 parts by mass of the cationic UV curable monomer. If the content of the cationic photopolymerization initiator is less than the lower limit, the curing reaction does not progress even when ultraviolet light is irradiated, and it tends to be difficult to obtain a cured coating film having a high hardness. On the other hand, even if the cationic photopolymerization initiator having a content exceeding the upper limit is added, the action to progress the curing reaction is not improved any more, and the photocurability is disproportionately reduced in some cases.

### <Cured Coating Film>

A cured coating film of the present invention is formed by photo-curing such a cationic UV curable coating composition of the present invention. For example, a base material is coated with the cationic UV curable coating composition of the present invention, and a coating film thus obtained is irradiated with ultraviolet light, so that the photo-curing reaction is initiated or progresses to cure the coating film. Thereby, it is possible to obtain a cured coating film having a high adhesion to a base material and excellent transparency and surface hardness.

The base material is not particularly limited. However, from the viewpoint that the cured coating film of the present invention achieves more excellent adhesion, a polycarbonate base material is preferable. Moreover, an ultraviolet light source used in the photo-curing reaction is not particularly limited. Examples thereof include ultraviolet lamps such as low-pressure mercury vapor lamps, high-pressure mercury vapor lamps, ultraviolet lasers, xenon lamps, and alkali metal lamps. The intensity of the ultraviolet irradiation on the coating film and the irradiation period are not particularly limited, but are adjusted as appropriate, depending on the types of the cationic UV curable monomer and the cationic photopolymerization initiator used.

Hereinabove, the embodiments of the organic-inorganic layered composite of the present invention and the method for producing the composition, as well as the embodiments the cationic UV curable coating composition of the present invention, the cured coating film using the composition, and the method for producing the cured coating film have been described. However, the present invention is not limited to the above-described embodiments. The present invention can be carried out in various modes to which modifications, improvements, and so forth can be made by those skilled in the art within the scope not departing from the gist of the present invention.

### [Examples]

Hereinafter, the present invention will be described more specifically on the basis of Examples, Comparative Examples, and Reference Example. However, the present invention is not limited to Examples below.

### (Example 1)

To 50 ml of methanol, 0.02 g (0.0001 mol) of aluminium chloride hexahydrate (special grade, manufactured by Wako Pure Chemical Industries, Ltd.) and 2.01 g (0.0099 mol) of magnesium chloride hexahydrate (special grade, manufactured by Wako Pure Chemical Industries, Ltd.) were added and the mixture was stirred to dissolve these. To the obtained solution, 4.97 g (0.02 mol) of 3-methacryloxypropyl trimethoxysilane ("LS-3380", manufactured by Shin-Etsu Chemical Co., Ltd.) was added, and further the mixture was stirred for 30 minutes. Thus, a raw-material solution was obtained.

To the raw-material solution, 200 ml of ion exchange water was added, and the mixture was stirred for 40 minutes using a blender (blender for business "MX151S" manufactured by Matsushita Electric Industrial Co., Ltd.). Then, while being stirred, 20.1 ml of an aqueous solution of 1-mol/L sodium hydroxide (for volumetric analysis, manufactured by Wako Pure Chemical Industries, Ltd.) was added, and the stirring was further continued for 10 minutes. After that, the obtained solution was left standing for 1 day, and a white precipitate was formed.

After a transparent supernatant liquid was removed from the aqueous solution containing the precipitate, 150 ml of ethyl acetate (Wako 1st Grade, manufactured by Wako Pure Chemical Industries, Ltd.) was added to the resultant and the mixture was sufficiently stirred. The precipitate in the aqueous solution was dissolved in ethyl acetate and extracted. This extraction operation was repeated three times, and all the precipitate was dissolved in ethyl acetate and then recovered.

The obtained solution was condensed using a rotary evaporator (bath temperature: 30°C), and ethyl acetate was completely removed. Thus, a colorless methacryl-Al-Mg-based layered composite (3.69 g) was obtained.

### (Examples 2 to 6)

Methacryl-Al-Mg-based layered composites were obtained in the same manner as in Example 1, except that the amounts of aluminium chloride hexahydrate, magnesium chloride hexahydrate, and the aqueous solution of 1-mol/L sodium hydroxide were altered to amounts shown in Table 1.

### (Comparative Example 1)

A colorless methacryl-Mg-based layered composite was obtained in the same manner as in Example 1, except that: aluminium chloride hexahydrate was not used, the amount of magnesium chloride hexahydrate was altered to 2.03 g (0.01 mol), and the amount of the aqueous solution of 1-mol/L sodium hydroxide was altered to 20.0 ml.

### (Comparative Example 2)

A colorless methacryl-Al-based layered composite was obtained in the same manner as in Example 1, except that: magnesium chloride hexahydrate was not used, the amount of aluminium chloride hexahydrate was altered to 2.41 g (0.01 mol), and the amount of the aqueous solution of 1-mol/L sodium hydroxide was altered to 30.0 ml.

### (Comparative Example 3 and Reference Example 1)

Methacryl-Al-Mg-based layered composites were obtained in the same manner as in Example 1, except that the amounts of aluminium chloride hexahydrate, magnesium chloride hexahydrate, and the aqueous solution of 1-mol/L sodium hydroxide were altered to amounts shown in Table 1.

**[Table 1]**

| | AlCl₃·6H₂O | MgCl₃·H₂O | NaOHaq | Si:(Al+Mg) | Al:Mg |
|---|---|---|---|---|---|
| | (g) | (g) | (ml) | (atomic ratio) | (atomic ratio) |
| Ex.1 | 0.02 | 2.01 | 20.1 | 2:1 | 1:99 |
| Ex.2 | 0.12 | 1.93 | 20.5 | 2:1 | 5:95 |
| Ex.3 | 0.36 | 1.73 | 21.5 | 2:1 | 15:85 |
| Ex.4 | 0.60 | 1.52 | 22.4 | 2:1 | 25:75 |
| Ex.5 | 0.82 | 1.34 | 23.4 | 2:1 | 34:66 |
| Ex.6 | 1.21 | 1.02 | 25.0 | 2:1 | 50:50 |
| Comp. Ex. 1 | 0.00 | 2.03 | 20.0 | 2:1 | 0:100 |
| Comp. Ex. 2 | 2.41 | 0.00 | 30.0 | 2:1 | 100:0 |
| Comp. Ex. 3 | 1.81 | 0.51 | 27.5 | 2:1 | 75:25 |
| Ref. Ex.1 | 1.62 | 0.67 | 26.7 | 2:1 | 67:33 |

### <Re-dispersibility in Organic Solvent>

Each of the layered composites obtained in Examples 1 to 6, Comparative Examples 1 to 3, and Reference Example 1 was dissolved in 1-methoxy-2-propanol (Wako Special Grade, hereinafter abbreviated as "PGM", manufactured by Wako Pure Chemical Industries, Ltd.). Thus, PGM solutions each containing 25% by mass of the layered composite were prepared. The PGM solutions were visually observed. As a result, all of the PGM solutions containing the divalent-trivalent metal-based organic-inorganic layered composites in which the metal atoms consist of an Al atom and a Mg atom (Examples 1 to 6, Comparative Example 3, and Reference Example 1) or the trivalent metal-based organic-inorganic layered composite in which the metal atom consists of an Al atom (Comparative Example 2) were colorless and transparent. On the other hand, the PGM solution containing the divalent metal-based organic-inorganic layered composite in which the metal atom consists of a Mg atom (Comparative Example 1) was clouded.

### <Particle Diameter Distribution Measurement>

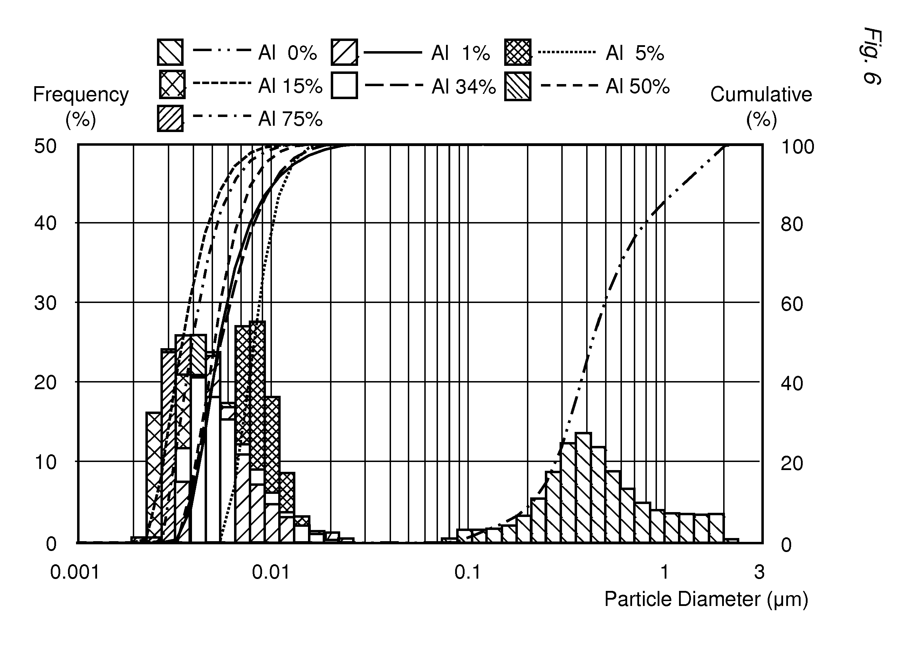

The particle diameter distributions of the layered composites in the PGM solutions prepared as described above were measured by a laser trapping method using a dynamic light scattering particle diameter distribution analyzer ("UPA-EX250" manufactured by Nikkiso Co., Ltd.) under conditions of Set Zero: 60 seconds, a measurement time: 60 seconds, the number of times measurement was performed: 3, a refractive index of PGM (20°C): 1.403, and a viscosity of PGM (25°C): 4.5cP. Note that the measurement was repeated until the variation in 50% particle diameter became 10% or less in the three measurements. Fig. 6 shows the particle diameter distributions of the layered composites obtained in Examples 1 to 3, 5, 6 and Comparative Examples 1, 3. Moreover, volume average particle diameters Mν were each calculated from the obtained particle diameter distributions. Further, average values of 10% particle diameter, 50% particle diameter, and 90% particle diameter in the three measurement results (the variation in 50% particle diameter was 10% or less) were calculated as D10, D50, and D90, respectively. Table 2 shows the result.

**[Table 2]**

| | Al:Mg | Mv | D10 | D50 | D90 |
|---|---|---|---|---|---|
| | (atomic ratio) | (µm) | (µm) | (µm) | (µm) |
| Comp. Ex. 1 | 0:100 | 0.549 | 0.204 | 0.409 | 1.189 |
| Ex. 1 | 1:99 | 0.005 | 0.004 | 0.005 | 0.010 |
| Ex. 2 | 5:95 | 0.008 | 0.006 | 0.008 | 0.011 |
| Ex. 3 | 15:85 | 0.004 | 0.003 | 0.003 | 0.006 |
| Ex. 5 | 34:66 | 0.006 | 0.004 | 0.005 | 0.010 |
| Ex. 6 | 50:50 | 0.005 | 0.004 | 0.005 | 0.008 |
| Comp. Ex. 3 | 75:25 | 0.004 | 0.003 | 0.004 | 0.006 |
| Comp. Ex. 2 | 100:0 | 0.003 | 0.002 | 0.003 | 0.004 |

As apparent from the result shown in Table 2, the volume average particle diameters Mν of the divalent-trivalent metal-based organic-inorganic layered composites in which the metal atoms consist of an Al atom and a Mg atom (Examples 1 to 3, 5, 6, and Comparative Example 3) and the trivalent metal-based organic-inorganic layered composite in which the metal atom consists of an Al atom (Comparative Example 2) were 0.008 µm or smaller. This revealed that a divalent-trivalent metal-based organic-inorganic layered composite and a trivalent metal-based organic-inorganic layered composite were excellent in re-dispersibility in an organic solvent. On the other hand, the volume average particle diameter Mν of the divalent metal-based organic-inorganic layered composite in which the metal atom consists of a Mg atom (Al: 0%) obtained in Comparative Example 1 was 0.549 µm.

From the above result, it was ascertained that an organic-inorganic composite obtained by substituting part of a divalent metal atom with a trivalent metal atom was excellent in dispersibility (particularly, re-dispersibility) in an organic solvent.

### <²⁹Si-NMR Measurement>

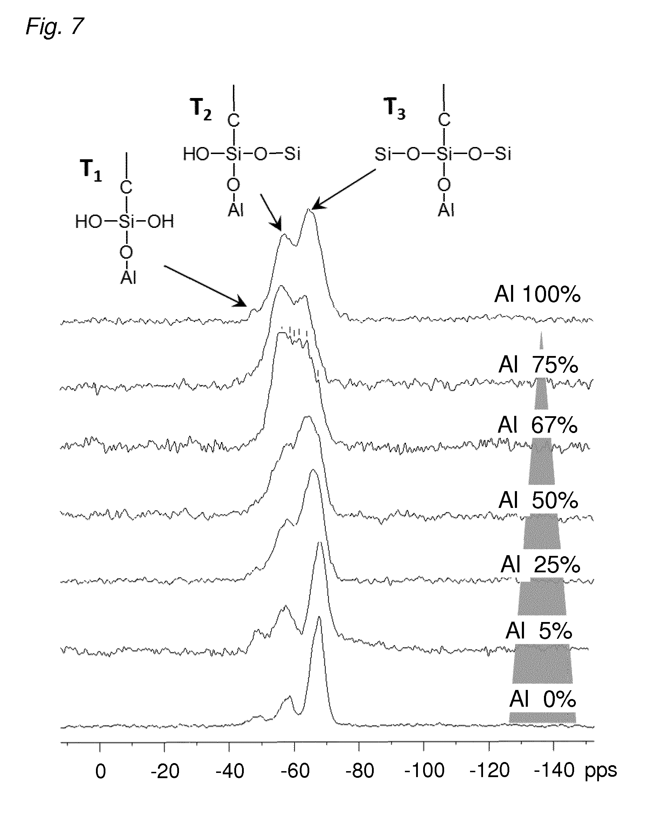

Each of the layered composites obtained in the above Examples, Comparative Examples, and Reference Example was placed in a sample holder ("Rotor Packer BL4", part number: K811101, manufactured by Bruker BioSpin K.K.), and the ²⁹Si-HD/MAS NMR spectrum of each layered composite was measured using a nuclear magnetic resonance (NMR) spectrometer ("AVANCE 400", manufactured by Bruker BioSpin K.K.) under a condition of the number of times integration was performed: 800. Fig. 7 shows the ²⁹Si-HD/MAS NMR spectra of the layered composites obtained in Examples 2, 4, 6, Comparative Examples 1 to 3, and Reference Example 1.

As apparent from the result shown in Fig. 7, it was revealed that, in the divalent-trivalent metal-based organic-inorganic layered composites in which the metal atoms consist of an Al atom and a Mg atom with an Al atom content of 67% or more, the content of HO-Si-O-Si bonds (T₂) was high in comparison with Si-O-Si-O-Si bonds (T₃). On the other hand, it was ascertained that when the Al atom content was 66% or less, the content of Si-O-Si-O-Si bonds (T₃) was high in comparison with HO-Si-O-Si bonds (T₂) and HO-Si-OH bonds (T₁), a reduction in the content of siloxane bonds as described above was suppressed. Particularly, it was revealed that there was a trend that the lower the Al atom content (i.e., the higher the Mg atom content), the higher the content of Si-O-Si-O-Si bonds (T₃), which strengthened the inorganic layer of the layered composite more.

### <Powder X-Ray Diffraction (XRD) Measurement>

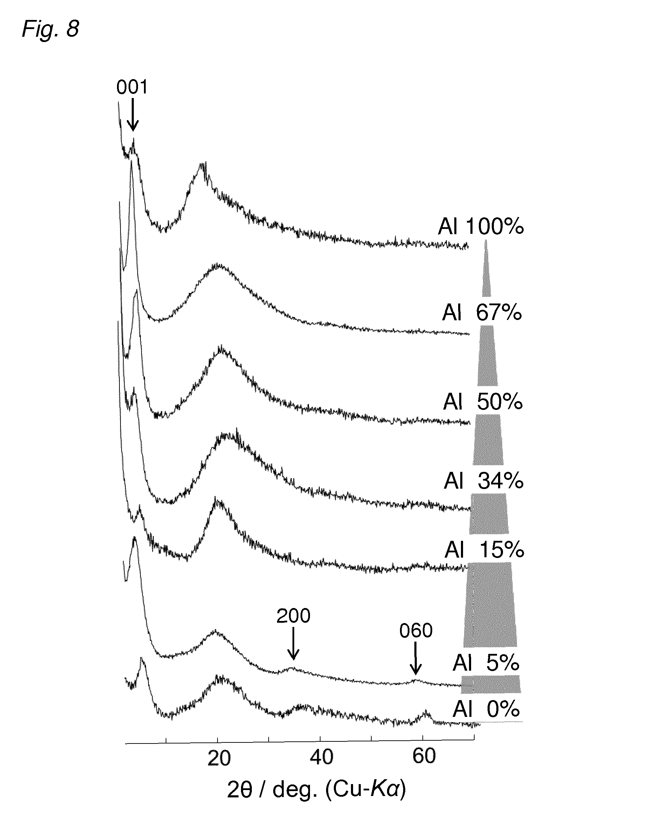

Each of the layered composites obtained in the above Examples, Comparative Examples, and Reference Example was placed in a glass-made sample holder (manufactured by Rigaku Corporation, Cat. No. 9200/2G, a depth: 0.2 mm), and the X-ray diffraction pattern of the layered composite was measured using an X-ray diffractometer ("RINT-2200 goniometer", manufactured by Rigaku Corporation) under conditions of a tube voltage: 40 kV, a tube current: 30 mA, a measurement method: FT, a radiation source: Cu (normally), Co, Cr, or Mo, an initial angle: 2.0°, and a final angle: 70°. Fig. 8 shows the X-ray diffraction patterns of the layered composites obtained in Examples 2, 3, 5, 6, Comparative Examples 1 and 2, and Reference Example 1.

As apparent from the result shown in Fig. 8, in the trivalent metal-based organic-inorganic layered composite in which the metal atom consists of an Al atom (Al: 100%), diffraction peaks derived from a (001) plane and a (020) plane were observed respectively at 2θ = around 5° and 2θ = around 20°. It was ascertained that the trivalent metal-based organic-inorganic layered composite had a favorable order in an interlayer direction.

In contrast, in the divalent-trivalent metal-based organic-inorganic layered composite of the present invention comprising 5% Al atom (95% Mg atom) as the metal atom, diffraction peaks were observed also at 2θ = around 35° and 2θ = around 60° in addition to 2θ = around 5° and 2θ = around 20°. The diffraction peaks at 2θ = around 35° and 2θ = around 60° were believed to be diffraction peaks respectively derived from a (200) plane and a (060) plane according to the X-ray diffraction pattern of the divalent metal-based organic-inorganic layered composite in which the metal atom consists of a Mg atom (Al: 0%). It was ascertained that the divalent-trivalent metal-based organic-inorganic layered composite of the present invention (Al: 5%) had favorable orders not only in an interlayer direction but also in an in-plane direction.

Moreover, the structure of the divalent metal-based organic-inorganic layered composite in which the metal atom consists of a Mg atom is believed to be a 2:1-type layered silicate structure having no pore in an octahedral sheet according to the diffraction peak shown in Fig. 8. Thus, it is believed that a 2:1-type layered silicate structure having a small number of pores in an octahedral sheet is formed in the divalent-trivalent metal-based organic-inorganic layered composite of the present invention.

### (Example 7)

A green methacryl-Al-Ni(II)-based layered composite (4.15 g) was obtained in the same manner as in Example 1, except that: 1.24 g (0.0033 mol) of aluminium nitrate nonahydrate (special grade, manufactured by Wako Pure Chemical Industries, Ltd.) was used in place of aluminium chloride hexahydrate, 1.76 g (0.0067 mol) of nickel(II) sulfate hexahydrate (special grade, manufactured by Wako Pure Chemical Industries, Ltd.) was used in place of magnesium chloride hexahydrate, the amount of the aqueous solution of 1-mol/L sodium hydroxide was altered to 23.1 ml, and the number of times the extraction was performed using ethyl acetate was altered to 1.

### (Example 8)

A blue methacryl-Al-Cu(II)-based layered composite (3.72 g) was obtained in the same manner as in Example 1, except that: 1.24 g (0.0033 mol) of aluminium nitrate nonahydrate (special grade, manufactured by Wako Pure Chemical Industries, Ltd.) was used in place of aluminium chloride hexahydrate, 1.14 g (0.0067 mol) of copper(II) chloride dihydrate (purity:99.9%, manufactured by Wako Pure Chemical Industries, Ltd.) was used in place of magnesium chloride hexahydrate, the amount of the aqueous solution of 1-mol/L sodium hydroxide was altered to 23.1 ml, and the number of times the extraction was performed using ethyl acetate was altered to 1.

### (Example 9)

A white methacryl-Al-Zn-based layered composite (3.61 g) was obtained in the same manner as in Example 1, except that: 1.24 g (0.0033 mol) of aluminium nitrate nonahydrate (special grade, manufactured by Wako Pure Chemical Industries, Ltd.) was used in place of aluminium chloride hexahydrate, 1.92 g (0.0067 mol) of zinc sulfate heptahydrate (special grade, manufactured by Wako Pure Chemical Industries, Ltd.) was used in place of magnesium chloride hexahydrate, the amount of the aqueous solution of 1-mol/L sodium hydroxide was altered to 23.1 ml, and the number of times the extraction was performed using ethyl acetate was altered to 1.

### (Example 10)

A brown methacryl-Fe(III)-Ni(II)-based layered composite (3.63 g) was obtained in the same manner as in Example 1, except that: 0.89 g (0.0033 mol) of iron(III) chloride hexahydrate (special grade, manufactured by Wako Pure Chemical Industries, Ltd.) was used in place of aluminium chloride hexahydrate, 1.76 g (0.0067 mol) of nickel(II) sulfate hexahydrate (special grade, manufactured by Wako Pure Chemical Industries, Ltd.) was used in place of magnesium chloride hexahydrate, the amount of the aqueous solution of 1-mol/L sodium hydroxide was altered to 23.1 ml, and the number of times the extraction was performed using ethyl acetate was altered to 1.

### (Comparative Example 4)

An aqueous solution containing a green precipitate was obtained in the same manner as in Example 1, except that: aluminium chloride hexahydrate was not used, 2.63 g (0.01 mol) of nickel(II) sulfate hexahydrate (special grade, manufactured by Wako Pure Chemical Industries, Ltd.) was used in place of magnesium chloride hexahydrate. After a transparent supernatant liquid was removed from the aqueous solution, the extraction operation using ethyl acetate was performed in the same manner as in Example 1. However, the precipitate was not dissolved in ethyl acetate, and it was difficult to perform the solvent extraction. For this reason, the precipitate was recovered by filtration, followed by water washing and vacuum drying. Thus, a green methacryl-Ni(II)-based layered composite (6.38 g) was obtained.

### (Comparative Example 5)

A blue methacryl-Cu(II)-based layered composite (3.54 g) was obtained in the same manner as in Comparative Example 1, except that 1.70 g (0.01 mol) of copper(II) chloride dihydrate (purity:99.9%, manufactured by Wako Pure Chemical Industries, Ltd.) was used in place of magnesium chloride hexahydrate.

### (Comparative Example 6)

A white methacryl-Zn-based layered composite (3.23 g) was obtained in the same manner as in Comparative Example 1, except that 2.88 g (0.01 mol) of zinc sulfate heptahydrate (special grade, manufactured by Wako Pure Chemical Industries, Ltd.) was used in place of magnesium chloride hexahydrate.

### <Re-dispersibility in Organic Solvent>

A PGM solution (25% by mass) of each of the layered composites obtained in Examples 7 to 10 and Comparative Examples 4 to 6 was prepared in the same manner as in the cases of Examples 1 to 6, Comparative Examples 1 to 3, and Reference Example 1. The re-dispersibility of the layered composite was visually observed. Table 3 shows the result.

**[Table 3]**

| | Metal atom | | Atomic ratio | | | Solution properties | |
|---|---|---|---|---|---|---|---|
| | trivalent | divalent | Si | trivalent | divalent | precipitate | dispersed state |
| Ex. 7 | Al | Ni(II) | 200 | 33 | 66 | none | green, transparent |
| Ex. 8 | Al | Cu(II) | 200 | 33 | 66 | none | blue, transparent |
| Ex. 9 | Al | Zn | 200 | 33 | 66 | none | colorless, transparent |
| Ex. 10 | Fe(III) | Ni(II) | 200 | 33 | 66 | none | brown, semi-transparent |
| Comp. Ex. 4 | - | Ni(II) | 200 | 0 | 100 | large amount | green, opaque |
| Comp. Ex. 5 | - | Cu(II) | 200 | 0 | 100 | none | blue, opaque |
| Comp. Ex. 6 | - | Zn | 200 | 0 | 100 | none | white, semi-transparent |

### <Particle Diameter Distribution Measurement>

The particle diameter distributions of the layered composites in the PGM solutions prepared as described above were measured by dynamic light scattering in the same manner as in the cases of Examples 1 to 6, Comparative Examples 1 to 3, and Reference Example 1. Note that, as to the layered composite obtained in Comparative Example 4, a precipitate was formed in the PGM solution. For this reason, the particle diameter distribution of the layered composite in the supernatant liquid was measured. Table 4 shows average particle diameters of each layered composite obtained in Examples 7, 10, and Comparative Example 4.

**[Table 4]**

| | Metal atom | | Mode average particle diameter | | | Volume average particle diameter | Area average particle diameter | Number average particle diameter | Standard deviation |
|---|---|---|---|---|---|---|---|---|---|
| | trivalent | divalent | most frequent particle diameter | frequency | width | | | | |
| | | | (µm) | (%) | (µm) | (µm) | (µm) | (µm) | (µm) |
| Ex. 7 | Al | Ni(II) | 0.0237 | 83.4 | 0.017 | 0.0545 | 0.0202 | 0.0277 | 0.0349 |
| Ex. 10 | Fe(III) | Ni(II) | 0.0459 | 68.9 | 0.053 | 0.1085 | 0.0338 | 0.0586 | 0.0859 |
| Comp. Ex. 4 | - | Ni(II) | 0.2626 | 100 | 0.320 | 0.2858 | 0.1029 | 0.1987 | 0.1601 |

As apparent from the result shown in Table 4, although the particles dispersed in the supernatant liquid of the divalent metal-based organic-inorganic layered composite in which the metal atom consists of a Ni(II) atom obtained in Comparative Example 4 had a relatively small diameter, the average particle diameter was large. In contrast, it was revealed that all average particle diameters of mode average particle diameter, volume average particle diameter, area average particle diameter, and number average particle diameter of the divalent-trivalent metal-based organic-inorganic layered composite in which the metal atoms consist of an Al atom and Ni(II) were small, and the re-dispersibility in an organic solvent was excellent.

In other words, it was ascertained that an organic-inorganic composite obtained by substituting part of a divalent metal atom with a trivalent metal atom had an improved dispersibility (particularly, re-dispersibility) in an organic solvent.

### (Preparation Example 1)

To 250 ml of methanol, 10.2 g (0.05 mol) of magnesium chloride hexahydrate (special grade, manufactured by Wako Pure Chemical Industries, Ltd.) was added and dissolved. To the solution, 24.6 g (0.10 mol) of 2-(3,4-epoxycyclohexyl)ethyltrimethoxysilane ("Sila-Ace S530", hereinafter abbreviated as "ECTS", manufactured by Chisso Corporation) was added and the mixture was stirred for 40 minutes. Immediately after 1000 ml of ion exchange water was added to the obtained solution, 100 ml of the aqueous solution of 1-mol/L sodium hydroxide (for volumetric analysis, manufactured by Wako Pure Chemical Industries, Ltd.) was added thereto, and a precipitate was formed.

After a transparent supernatant liquid was removed from the aqueous solution containing the precipitate, 300 ml of ethyl acetate (Wako 1st Grade, manufactured by Wako Pure Chemical Industries, Ltd.) was added to the resultant and the mixture was sufficiently stirred. The precipitate in the aqueous solution was dissolved in ethyl acetate and extracted. This extraction operation was repeated three times, and all the precipitate was dissolved in ethyl acetate and then recovered.

The obtained solution was condensed using a rotary evaporator (bath temperature: 30°C), and ethyl acetate was completely removed. Thus, an alicyclic epoxy-Mg-based layered composite (19.2 g) was obtained.

### (Preparation Example 2)

To 200 ml of methanol, 5.10 g (0.025 mol) of magnesium chloride hexahydrate (special grade, manufactured by Wako Pure Chemical Industries, Ltd.) was added and dissolved. To the solution, 24.6 g (0.10 mol) of 2-(3,4-epoxycyclohexyl)ethyltrimethoxysilane ("Sila-Ace S530", hereinafter abbreviated as "ECTS", manufactured by Chisso Corporation) was added and the mixture was stirred for 40 minutes. Immediately after 1000 ml of ion exchange water was added to the obtained solution, a solution obtained by dissolving 6.05 g (0.025 mol) of aluminium chloride hexahydrate (special grade, manufactured by Wako Pure Chemical Industries, Ltd.) in 50 ml of methanol was added. Further, 125 ml of the aqueous solution of 1-mol/L sodium hydroxide (for volumetric analysis, manufactured by Wako Pure Chemical Industries, Ltd.) was added thereto, and a precipitate was formed.

After the obtained precipitate was extracted three times using ethyl acetate in the same manner as in Preparation Example 1, ethyl acetate was completely removed. Thus, an alicyclic epoxy-Al-Mg-based layered composite (14.7 g) was obtained.

### (Preparation Examples 3 and 4)

Alicyclic epoxy-Al-Mg-based layered composites were obtained in the same manner as in Preparation Example 2, except that the amount of magnesium chloride hexahydrate, the amount of aluminium chloride hexahydrate, and the amount of the aqueous solution of 1-mol/L sodium hydroxide were altered to amounts shown in Table 5.

### (Preparation Example 5)

An alicyclic epoxy-Al-based layered composite (19.0 g) was obtained in the same manner as in Preparation Example 1 , except that: 12.1 g (0.05 mol) of aluminium chloride hexahydrate (special grade, manufactured by Wako Pure Chemical Industries, Ltd.) was used in place of magnesium chloride hexahydrate, and the amount of the aqueous solution of 1-mol/L sodium hydroxide was altered to 150 ml.

### (Preparation Example 6)

To 250 ml of methanol, 10.2 g (0.05 mol) of magnesium chloride hexahydrate (special grade, manufactured by Wako Pure Chemical Industries, Ltd.) was added and dissolved. To the solution, 23.6 g (0.10 mol) of 3-glycidyloxypropyltrimethoxysilane ("Sila-Ace S510", hereinafter abbreviated as "GPTS", manufactured by Chisso Corporation) was added and the mixture was stirred for 40 minutes. To the obtained solution, 1000 ml of an aqueous solution of 0.1-mol/L sodium hydroxide obtained by diluting 100 ml of the aqueous solution of 1-mol/L sodium hydroxide (for volumetric analysis, manufactured by Wako Pure Chemical Industries, Ltd.) 10-fold with water was added, and a precipitate was formed.

After the obtained precipitate was extracted three times using ethyl acetate in the same manner as in Preparation Example 1, ethyl acetate was completely removed. Thus, a glycidyl-Mg-based layered composite (29.5 g) was obtained.

**[Table 5]**

| | Silane compound | AlCl₃·6H₂O | MgCl₃·6H₂O | NaOHaq | Si:(Al+Mg) | Al:Mg |
|---|---|---|---|---|---|---|
| | | (g) | (g) | (ml) | (atomic ratio) | (atomic ratio) |
| Prep. Ex. 1 | ECTS | 0 | 10.2 | 100 | 2:1 | 0:100 |
| Prep. Ex. 2 | ECTS | 6.05 | 5.10 | 125 | 2:1 | 50:50 |
| Prep. Ex. 3 | ECTS | 7.97 | 3.46 | 133 | 2:1 | 67:33 |
| Prep. Ex. 4 | ECTS | 10.3 | 1.52 | 143 | 2:1 | 85:15 |
| Prep. Ex. 5 | ECTS | 12.1 | 0 | 150 | 2:1 | 100:0 |
| Prep. Ex. 6 | GPTS | 0 | 10.2 | 100 | 2:1 | 0:100 |

### <¹³C-NMR Measurement>

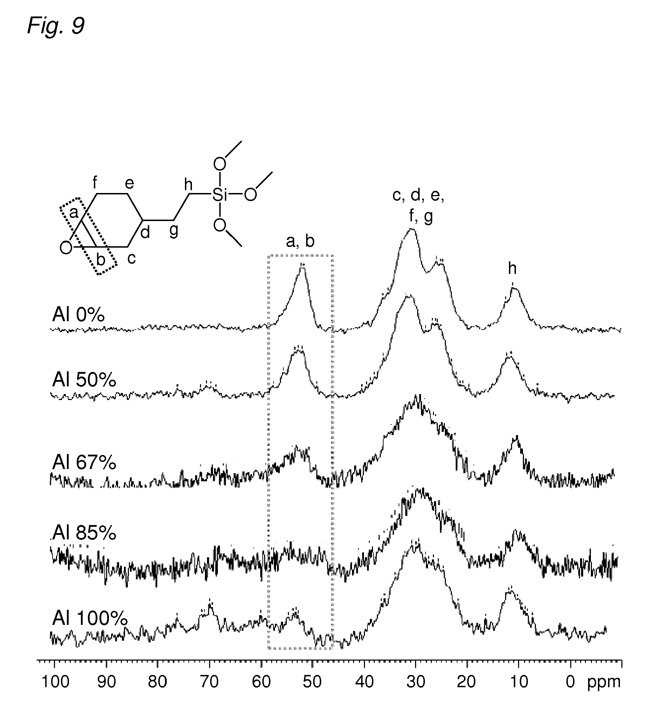

Each of the alicyclic epoxy-Mg-based layered composite obtained in Preparation Example 1, the alicyclic epoxy-Al-Mg-based layered composites obtained in Preparation Examples 2 to 4, and the alicyclic epoxy-Al-based layered composite obtained in Preparation Example 5 was placed in a sample holder ("Rotor Packer BL4", part number: K811101, manufactured by Bruker BioSpin K.K.), and the ¹³C-CP/MAS NMR spectrum of each layered composite was measured using a nuclear magnetic resonance (NMR) spectrometer ("AVANCE 400", manufactured by Bruker BioSpin K.K.) under a condition of the number of times integration was performed: 3200. Fig. 9 shows the ¹³C-CP/MAS NMR spectra of the layered composites obtained in Preparation Examples 1 to 5. Note that Fig. 9 also shows the relationship between peak positions in the NMR spectra and carbon atoms in a 2-(3,4-epoxycyclohexyl)ethyl group bonded to a Si atom.

As shown in Fig. 9, a peak at 10 ppm was attributed to a carbon atom (h) bonded to the Si atom, a peak at 53 ppm was attributed to two carbon atoms (a, b) constituting the epoxy group, and a peak from 20 to 40 ppm was attributed to the remaining five carbon atoms (c to g). It is shown that, in the layered composites having a peak at 53 ppm, the ring of the alicyclic epoxy group is not opened, keeping the structure. Thus, as apparent from the result shown in Fig. 9, in the layered composites with an Al atom content of 67% or less, peaks derived from two carbon atoms (a, b) constituting the epoxy group were observed, and it was ascertained that the alicyclic epoxy group was kept. On the other hand, in the layered composite with an Al atom content of 85% or 100%, peaks derived from two carbon atoms (a, b) constituting the epoxy group were not observed, revealing that the alicyclic epoxy group was cleaved.

### <X-Ray Diffraction (XRD) Measurement>

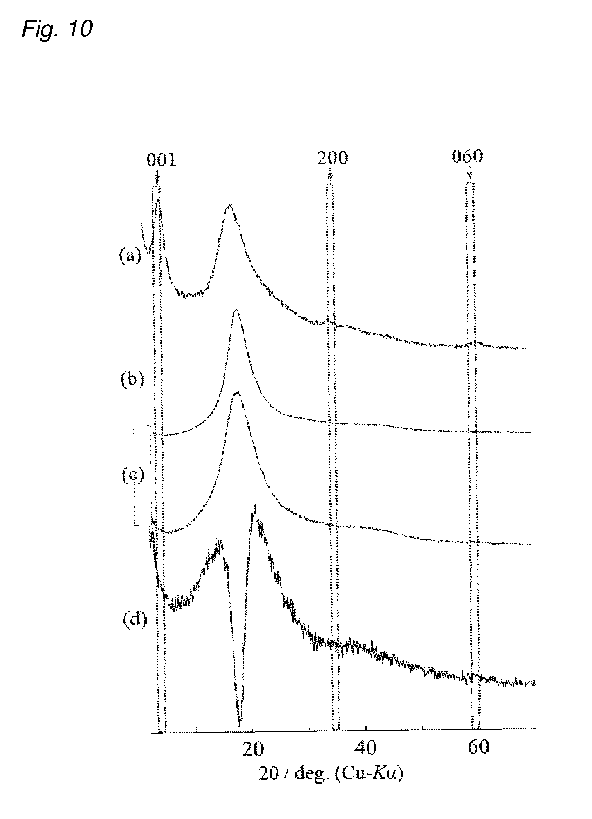

25 parts by mass of the alicyclic epoxy-Al-Mg-based layered composite (Al: 50%) obtained in Preparation Example 2 was mixed with 75 parts by mass of 3,4-epoxycyclohexenylmethyl-3',4'-epoxycyclohexene carboxylate ("CELLOXIDE 2021P", manufactured by DAICEL-CYTEC Company, Ltd.), which is a cationic UV curable monomer. This mixture, the alicyclic epoxy-Al-Mg-based layered composite (Al: 50%), and 3,4-epoxycyclohexenylmethyl-3',4'-epoxycyclohexene carboxylate were each placed in a glass-made sample holder (manufactured by Rigaku Corporation, Cat. No. 9200/2G, a depth: 0.2 mm), and the X-ray diffraction patterns were measured using an X-ray diffractometer ("RINT-TTR", manufactured by Rigaku Corporation) under conditions of a tube voltage: 50 kV, a tube current: 300 mA, a radiation source: CuKα, an initial angle: 2.0°, a final angle: 70°, and a scan speed: 2.0 sec. Fig. 10 shows the X-ray diffraction patterns of (a) the alicyclic epoxy-Al-Mg-based layered composite (Al: 50%), (b) 3,4-epoxycyclohexenylmethyl-3',4'-epoxycyclohexene carboxylate, and (c) the mixture of the alicyclic epoxy-Al-Mg-based layered composite (Al: 50%) and 3,4-epoxycyclohexenylmethyl-3',4'-epoxycyclohexene carboxylate.

As apparent from the result shown in Fig. 10(a), in the alicyclic epoxy-Al-Mg-based layered composite (Al: 50%), diffraction peaks derived from a (001) plane (2θ = around 5°) , a (020) plane (2θ = around 20°), a (200) plane (2θ = around 37°), and a (060) plane (2θ = around 60°) were observed. A diffraction peak derived from a (001) plane indicates an order in a layer direction, and diffraction peaks derived from a (200) plane and a (060) plane indicate an order in an in-plane direction. From these results, it was ascertained that the alicyclic epoxy-Al-Mg-based layered composite (Al: 50%) had a layer structure similar to a 2:1-type layered silicate structure of a smectite-based layered clay mineral. Incidentally, a diffraction peak derived from a (020) plane is believed to be a peak due to a reflection by an organic material.

Further, Fig. 10(d) shows a difference between the X-ray diffraction pattern (c) of the mixture and the X-ray diffraction pattern (b) of 3,4-epoxycyclohexenylmethyl-3',4'-epoxycyclohexene carboxylate. In this result, diffraction peaks derived from a (200) plane and a (060) plane were observed, but no diffraction peak derived from a (001) plane was observed. In other words, it was ascertained that the alicyclic epoxy-Al-Mg-based layered composite (Al: 50%) in 3,4-epoxycyclohexenylmethyl-3',4'-epoxycyclohexene carboxylate kept an order in an in-plane direction, but swelled and lost an order in a layer direction.

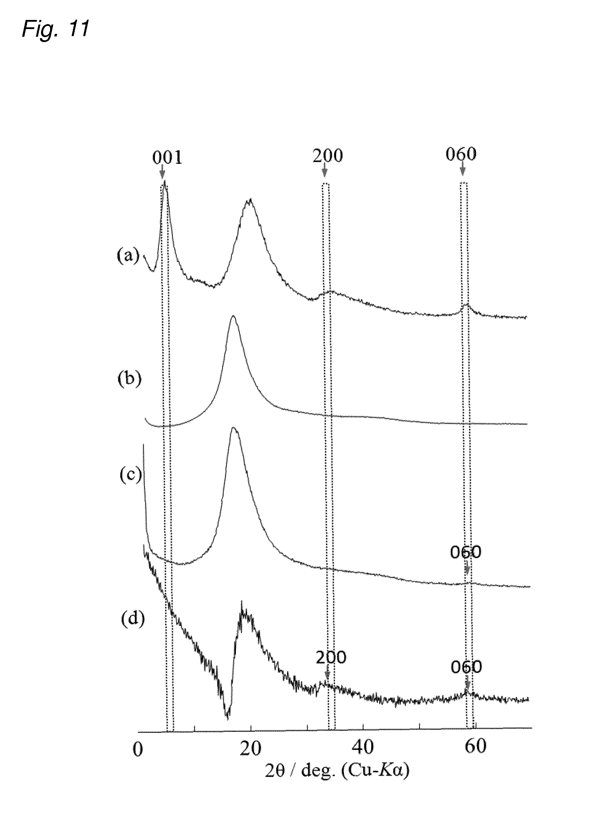

Furthermore, regarding the glycidyl-Mg-based layered composite (Al: 0%) obtained in Preparation Example 6 also, a mixture thereof with 3,4-epoxycyclohexenylmethyl-3',4'-epoxycyclohexene carboxylate (layered composite: 25% by mass) was prepared in the same manner, and the X-ray diffraction pattern was measured. Fig. 11 shows X-ray diffraction patterns of (a) the glycidyl-Mg-based layered composite (Al: 0%), (b) 3,4-epoxycyclohexenylmethyl-3',4'-epoxycyclohexene carboxylate, and (c) the mixture of the glycidyl-Mg-based layered composite (Al: 0%) and 3,4-epoxycyclohexenylmethyl-3',4'-epoxycyclohexene carboxylate.

As apparent from the result shown in Fig. 11(a), in the glycidyl-Mg-based layered composite (Al: 0%) also, diffraction peaks derived from a (001) plane (2θ = 6.0°), a (020) plane (2θ = 21.2°), a (200) plane (2θ = 35.2°), and a (060) plane (2θ = 59.5°) were observed. From this result, it was ascertained that the glycidyl-Mg-based layered composite (Al: 0%) also had a layer structure (interlayer distance: 1.47 nm) similar to a 2:1-type layered silicate structure of a smectite-based layered clay mineral.

Moreover, Fig. 11(d) shows a difference between the X-ray diffraction pattern (c) of the mixture and the X-ray diffraction pattern (b) of 3,4-epoxycyclohexenylmethyl-3',4'-epoxycyclohexene carboxylate. In this result also, diffraction peaks derived from a (200) plane and a (060) plane indicating an order in an in-plane direction were observed, but no diffraction peak derived from a (001) plane indicating an order in a layer direction was observed. In other words, it was ascertained that the glycidyl-Mg-based layered composite (Al: 0%) also swelled and lost an order in a layer direction in 3,4-epoxycyclohexenylmethyl-3',4'-epoxycyclohexene carboxylate.

### (Example 11)

A coating composition was prepared by mixing 25 parts by mass of the alicyclic epoxy-Al-Mg-based layered composite (Al: 50%) obtained in Preparation Example 2 and 75 parts by mass of 3,4-epoxycyclohexenylmethyl-3',4'-epoxycyclohexene carboxylate ("CELLOXIDE 2021P", manufactured by DAICEL-CYTEC Company, Ltd.), which is a cationic UV curable monomer, with 5 PHR of an iodonium salt-based photopolymerization initiator ("IRGACURE 250", a 3:1 mixture of (4-methylphenyl)[4-(2-methylpropyl)phenyl]iodonium-hexafluorophosphate and a solvent propylene carbonate, manufactured by BASF SE).

Using a bar coater ("Select-Roller A-bar", bar: OSP-15, wire bar model (equivalent): #6.6, manufactured by OSG SYSTEM PRODUCTS Corporation), the coating composition was applied to a transparent polycarbonate substrate, which had a surface having been washed with 2-propanol, in such a manner that the film thickness after curing was to be 15 µm. Then, using a UV curing unit (1-kW high-pressure mercury vapor lamp ("Handy1000", manufactured by SEN Lights Corporation)), the coating film was cured by ultraviolet irradiation under conditions of an irradiation intensity: 1200mJ/cm² and a irradiation dose: 140 mW.

### (Example 12)

A cured coating film was prepared in the same manner as in Example 11, except that 75 parts by mass of 3-ethyl-3-hydroxymethyloxetane ("OXT-101", manufactured by Toagosei Co., Ltd.) was used as a cationic UV curable monomer.

### (Example 13)

A cured coating film was prepared in the same manner as in Example 11, except that 75 parts by mass of 3-ethyl-3{[(3-ethyloxetan-3-yl)methoxy]methyl}oxetane ("OXT-221", manufactured by Toagosei Co., Ltd.) was used as a cationic UV curable monomer.

### (Example 14)

A cured coating film was prepared in the same manner as in Example 11, except that 25 parts by mass of the alicyclic epoxy-Al-Mg-based layered composite (Al: 67%) obtained in Preparation Example 3 was used in place of the alicyclic epoxy-Al-Mg-based layered composite (Al: 50%).

### (Comparative Example 7)

A cured coating film was prepared in the same manner as in Example 11, except that the alicyclic epoxy-Al-Mg-based layered composite (Al: 50%) was not used.

### (Comparative Example 8)

A cured coating film was prepared in the same manner as in Example 11, except that the glycidyl-Mg-based layered composite (Al: 0%) obtained in Preparation Example 6 was used in place of the alicyclic epoxy-Al-Mg-based layered composite (Al: 50%).

### (Comparative Example 9)

A cured coating film was prepared in the same manner as in Example 11, except that the alicyclic epoxy-Mg-based layered composite (Al: 0%) obtained in Preparation Example 1 was used in place of the alicyclic epoxy-Al-Mg-based layered composite (Al: 50%).

### (Comparative Example 10)

A cured coating film was prepared in the same manner as in Example 11, except that the alicyclic epoxy-Al-based layered composite (Al: 100%) obtained in Preparation Example 5 was used in place of the alicyclic epoxy-Al-Mg-based layered composite (Al: 50%).

### (Comparative Example 11)

A cured coating film was prepared in the same manner as in Example 11, except that 25 parts by mass of the alicyclic epoxy-Al-Mg-based layered composite (Al: 85%) obtained in Preparation Example 4 was used in place of the alicyclic epoxy-Al-Mg-based layered composite (Al: 50%).

### <Adhesion>

The adhesion of the cured coating films obtained in the above Examples and Comparative Examples was measured according to the method described in the crosscut adhesion test (JIS K5400.8.5). Specifically, a cured coating film was scratched at intervals of 1 mm lengthwise and crosswise to form a grid with 100 squares. A cellulose adhesive tape (product name "CELLOTAPE(registered trademark) CT-24", manufactured by Nichiban Co., Ltd.) was strongly attached with pressure to the surface of this grid portion. The tape was quickly peeled therefrom, and the number of grid squares on which the cured coating film remained was counted. Table 6 shows the result.

### <Storage Modulus, Surface Hardness, and Maximum Indentation Depth>

The storage modulus, surface hardness, and maximum indentation depth of the cured coating films obtained in the above Examples and Comparative Examples were measured by a nanoindentation method. Specifically, using a nanoindenter ("TriboScope", manufactured by Hysitron Corporation), the relationship was determined between the indentation depth and the load at the time of pressing an indenter under a condition of a maximum load: 180 µN. From the obtained result, the storage modulus, surface hardness, and maximum indentation depth of the cured coating films were determined. Table 6 shows the result.

### <Transparency>

The cured coating films obtained in the above Examples and Comparative Examples were visually observed.

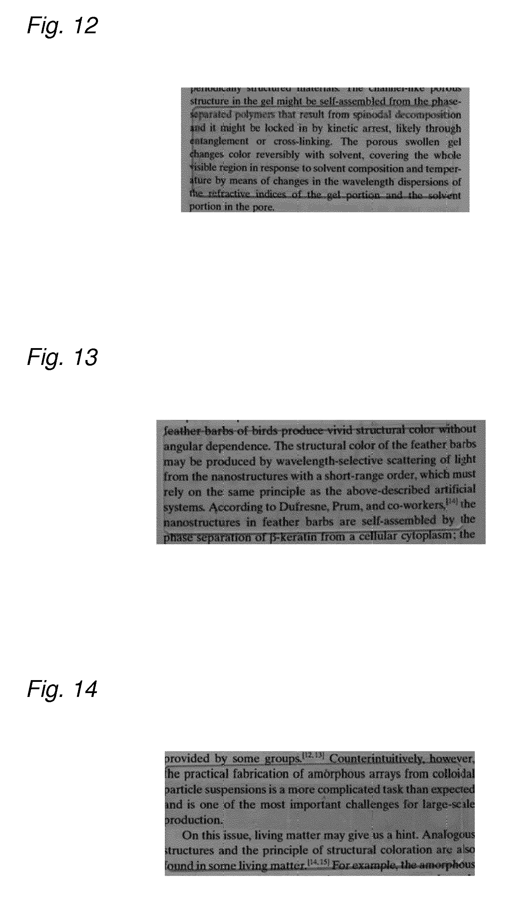

Figs. 12 to 14 are photographs of thin films (cured coating films) obtained in Examples 11 to 13. Moreover, the appearances of thin films (cured coating films) obtained in Examples 11 and 14 and Comparative Examples 7 to 11 were judged based on the following criteria. Table 6 shows the result.
A: colorless, transparent.
B: the entire cured coating film was whitened.

### <Water Resistance>

Multilayer plate constituted of each of the cured coating films obtained in the above Examples and Comparative Examples and a transparent polycarbonate substrate was immersed in hot water at 40°C for 10 days, and then pulled up and dried. The cured coating films were visually observed and judged based on the following criteria. Table 6 shows the result.
A: colorless, transparent.
B: only an edge portion of the cured coating film was whitened.
C: a portion other than the edge portion of the cured coating film was slightly whitened.
D: the entire cured coating film was whitened.

**[Table 6]**

| | Silane compound | Al:Mg | The number of grid squares peeled | Storage modulus | Surface hardness | Maximum indentation depth | Transparency | Water resistance |
|---|---|---|---|---|---|---|---|---|
| | | (atomic ratio) | (number) | (GPa) | (GPa) | (nm) | | |
| Comp. Ex. 9 | ECTS | 0:100 | 0/100 | 7.87 | 0.52 | 135.5 | B | D |
| Ex. 11 | ECTS | 50:50 | 0/100 | 7.30 | 0.47 | 140.2 | A | A |
| Ex. 14 | ECTS | 67:33 | 0/100 | 9.03 | 0.54 | 129.8 | A | A |
| Comp. Ex. 11 | ECTS | 85:15 | 0/100 | 8.85 | 0.53 | 131.9 | A | D |
| Comp. Ex. 10 | ECTS | 100:0 | 0/100 | 9.60 | 0.58 | 125.3 | A | D |
| Comp. Ex. 7 | - | - | 0/100 | 3.20 | 0.19 | 218.0 | A | A |
| Comp. Ex. 8 | GPTS | 0:100 | 0/100 | not measured | not measured | not measured | B | D |

As apparent from the result shown in Table 6, in all of the cured coating films obtained in Examples 11 and 14, Comparative Examples 7 to 11, no peeling of the coating film was observed, and the adhesion to the polycarbonate substrate was excellent.

Moreover, as apparent from the result shown in Table 6, it was ascertained that the cured coating films of the present invention comprising the divalent-trivalent metal-based organic-inorganic layered composites containing an alicyclic epoxy group, an Al atom, and a Mg atom (Examples 11, 14) had a storage modulus and a surface hardness 2 to 3 times higher and had a shallower maximum indentation depth (having a higher hardness) than the case where no organic-inorganic layered composite was contained (Comparative Example 7).

Further, as apparent from the result shown in Table 6, the cured coating films comprising the divalent-trivalent metal-based organic-inorganic layered composites containing an alicyclic epoxy group, an Al atom, and a Mg atom (Examples 11 and 14, Comparative Example 11), the cured coating film comprising no organic-inorganic layered composite (Comparative Example 7), and the cured coating film comprising the trivalent metal-based organic-inorganic layered composite containing an alicyclic epoxy group and an Al atom (Comparative Example 10) were excellent in transparency. On the other hand, in the cases where the divalent metal-based organic-inorganic layered composites containing an alicyclic epoxy group or a glycidyl group and a Mg atom were used (Comparative Examples 8 and 9), the divalent metal-based organic-inorganic layered composites were not uniformly dispersed in the coating compositions and in the cured coating films, and the cured coating films were whitened.

In addition, as apparent from the result shown in Figs. 12 to 14, it was possible to sufficiently read characters through the multilayer plate constituted of each of the cured coating films obtained in Examples 11 to 13 and the transparent polycarbonate substrate. It was ascertained that cured coating films excellent in transparency were formed regardless of the type of the cationic UV curable monomer.

Furthermore, as apparent from the result shown in Table 6, in the cases where the divalent-trivalent metal-based organic-inorganic layered composites comprising an Al atom and a Mg atom in predetermined proportions were used (Examples 11 and 14), cured coating films excellent in water resistance were formed. On the other hand, it was revealed that in the cases where the organic-inorganic layered composites having a high Al atom content were used (Comparative Examples 10 and 11), the cured coating film were whitened, and the water resistance was poor. Presumably, in Comparative Examples 10 and 11, part of the alicyclic epoxy group in the organic-inorganic layered composite was cleaved, forming a hydroxyl group, and the crosslinking reaction with the cationic UV curable monomer did not progress.

### [Industrial Applicability]

As has been described above, the present invention makes it possible to obtain an organic-inorganic layered composite comprising a divalent metal atom, and being excellent in dispersibility (particularly, re-dispersibility) in an organic material such as an organic solvent, the organic-inorganic layered composite containing a lot of siloxane bonds in comparison with silanol groups.

Thus, the divalent-trivalent metal-based organic-inorganic layered composite of the present invention is excellent in dispersibility (particularly, re-dispersibility) in an organic material such as an organic solvent and also excellent in mechanical strength such as hardness and abrasion resistance. Accordingly, the divalent-trivalent metal-based organic-inorganic layered composite is useful as a filler used in coating compositions and raw materials for molding, and the like, and can provide an excellent mechanical strength to resin coating films and resin molded articles.

Moreover, use of the divalent-trivalent metal-based the organic-inorganic layered composite of the present invention having a predetermined functional group makes it possible to obtain a cationic UV curable coating composition comprising the organic-inorganic layered composite excellent in dispersibility and being excellent in photocurability. Further, in a cured coating film of the present invention formed by photo-curing a coating film comprising such a cationic UV curable coating composition of the present invention, the organic-inorganic layered composite is uniformly dispersed, and thus an excellent transparency is provided. Furthermore, since the cured coating film is uniformly strengthened, the surface hardness is excellent.

Thus, the cationic UV curable coating composition of the present invention is capable of forming a cured coating film having excellent transparency and surface hardness without impairing an excellent adhesion to a base material. Accordingly, the cationic UV curable coating composition is useful as coating materials for automobile exterior, and the like, which require a high abrasion resistance.

### [Reference Signs List]

1: inorganic layer, 1a: octahedral sheet containing divalent and trivalent metal atoms as central atom, 1b: tetrahedral sheet containing Si atom as central atom, 1c: octahedral sheet containing only divalent metal atom as central atom, 1d: octahedral sheet containing only trivalent metal atom as central atom, 2: organic layer, 2a: organic group, 3: interlayer cation.

## Claims

1. A divalent-trivalent metal-based organic-inorganic layered composite represented by the following formula (1):
[R¹ₙSiO_{(4-n)/2}]ₓ[[(M¹_{2/2}O)_{y}(M²_{2/3}O)_{z}][H₂O]_{w} (1)
(in the formula (1), R¹ represents an organic group, M¹ represents a divalent metal atom, M² represents a trivalent metal atom, n is an integer of 1 to 3, x, y, and z are arbitrary numbers that satisfy a condition represented by 0.5 ≤ x/(y+2z/3) ≤ 3, and w represents the number of a structural water molecule),
wherein the number of the trivalent metal atom is 1 to 67% of a total of 100 atoms of the divalent metal atom and the trivalent metal atom.

2. The divalent-trivalent metal-based organic-inorganic layered composite according to claim 1, wherein the number of the trivalent metal atom is 1 to 45% of a total of 100 atoms of the divalent metal atom and the trivalent metal atom.

3. The divalent-trivalent metal-based organic-inorganic layered composite according to claim 1, wherein the number of the trivalent metal atom is 1 to 10% of a total of 100 atoms of the divalent metal atom and the trivalent metal atom.

4. The divalent-trivalent metal-based organic-inorganic layered composite according to any one of claims 1 to 3, wherein the trivalent metal atom is at least one metal atom of aluminium (Al) and iron (III) (Fe(III)).

5. The divalent-trivalent metal-based organic-inorganic layered composite according to any one of claims 1 to 4, wherein the divalent metal atom is at least one metal atom selected from the group consisting of magnesium (Mg), nickel(II) (Ni(II)), cobalt(II) (Co(II)), copper(II) (Cu(II)), manganese (Mn), iron(II) (Fe(II)), lithium (Li), vanadium(II) (V(II)), zirconium (Zr), and zinc (Zn).

6. A method for producing a divalent-trivalent metal-based organic-inorganic layered composite, comprising:
a preparation step of dissolving an organoalkoxysilane represented by the following formula (2) :
R¹ₙSi(OR²)₍₄₋ₙ₎ (2)
(in the formula (2), R¹ represents an organic group, OR² represents an alkoxy group, and n is an integer of 1 to 3), a divalent metal compound containing a divalent metal atom, and a trivalent metal compound containing a trivalent metal atom in a first solvent, which is a polar solvent, to thereby prepare a raw-material solution containing a silicon atom, the divalent metal atom, and the trivalent metal atom under such conditions that an atomic ratio of the silicon atom to the metal atoms (the number of the silicon atom/a total number of the divalent metal atom and the trivalent metal atom) is from 0.5 to 3 both inclusive, and the number of the trivalent metal atom is 1 to 67% of a total of 100 atoms of the divalent metal atom and the trivalent metal atom;
a reaction step of subjecting the organoalkoxysilane, the divalent metal compound, and the trivalent metal compound to hydrolysis and dehydration condensation, to thereby synthesize a divalent-trivalent metal-based organic-inorganic layered composite containing the silicon atom, the divalent metal atom, and the trivalent metal atom; and
a removal step of adding to a solution resulting from the reaction step a second solvent, which does not dissolve compatibly with the solution, to thereby dissolve the divalent-trivalent metal-based organic-inorganic layered composite in the second solvent, and then removing a solution, which does not dissolve compatibly with the second solvent.

7. The method for producing a divalent-trivalent metal-based organic-inorganic layered composite according to claim 6, wherein
in the reaction step, water is added to the raw-material solution to synthesize the divalent-trivalent metal-based organic-inorganic layered composite, and
in the removal step, the second solvent, which does not dissolve compatibly with water at least, is added to an aqueous solution after the reaction step, and thereafter the aqueous solution is removed.

8. The method for producing a divalent-trivalent metal-based organic-inorganic layered composite according to any one of claims 6 and 7, wherein the first solvent is at least one polar solvent selected from the group consisting of inorganic polar solvents and organic polar solvents.

9. The method for producing a divalent-trivalent metal-based organic-inorganic layered composite according to claim 8, wherein the first solvent is at least one polar solvent selected from the group consisting of water and water-soluble organic solvents.

10. The method for producing a divalent-trivalent metal-based organic-inorganic layered composite according to any one of claims 6 to 9, wherein the second solvent is at least one organic solvent selected from the group consisting of ethyl acetate, toluene, and chloroform.

11. The method for producing a divalent-trivalent metal-based organic-inorganic layered composite according to any one of claims 6 to 10, wherein, in the reaction step, a pH of the raw-material solution is adjusted to an alkaline level to promote the reactions of the organoalkoxysilane, the divalent metal compound, and the trivalent metal compound.

12. The method for producing a divalent-trivalent metal-based organic-inorganic layered composite according to any one of claims 6 to 11, further comprising, after the removal step, a recovery step of removing the second solvent to thereby recover the divalent-trivalent metal-based organic-inorganic layered composite.

13. The method for producing a divalent-trivalent metal-based organic-inorganic layered composite according to any one of claims 6 to 12, wherein the trivalent metal atom is at least one metal atom of aluminium (Al) and iron(III) (Fe(III)).

14. The method for producing a divalent-trivalent metal-based organic-inorganic layered composite according to any one of claims 6 to 13, wherein the divalent metal atom is at least one metal atom selected from the group consisting of magnesium (Mg), nickel(II) (Ni(II)), cobalt(II) (Co(II)), copper(II) (Cu(II)), manganese (Mn), iron(II) (Fe(II)), lithium (Li), vanadium(II) (V(II)), zirconium (Zr), and zinc (Zn).

15. A cationic UV curable coating composition comprising:
the divalent-trivalent metal-based organic-inorganic layered composite according to any one of claims 1 to 5, wherein R¹ in the formula (1) is an organic group having at least one functional group of an epoxy group, an oxetanyl group, and a vinyl ether group;
a cationic UV curable monomer; and
a cationic photopolymerization initiator.

16. The cationic UV curable coating composition according to claim 15, wherein the cationic UV curable monomer is at least one compound selected from the group consisting of epoxy compounds, oxetane compounds, vinyl ether compounds, and styrene-based compounds.

17. A cured coating film obtained by photo-curing the cationic UV curable coating composition according to any one of claims 15 and 16.

18. A method for producing a cured coating film, comprising:
a step of coating a base material with the cationic UV curable coating composition according to any one of claims 15 and 16, and
a step of irradiating a coating film thus obtained with ultraviolet light to cure the coating film.
